# EUROPEAN PATENT APPLICATION

(11) **EP 1 729 427 A1**
(43) Date of publication of application: **06.12.2006**
(21) Application number: 05721049.4
(22) Date of filing: 11.03.2005
(51) Int. Cl.: H04B 3/30

(54) **BALANCED TRANSMISSION SYSTEM**

(30) Priority: 22.03.2004 JP 2004082309; 24.12.2004 JP 2004373059
(71) Applicant: Matsushita Electric Industries Co., Ltd., Kadoma-shi, Osaka 571-8501 (JP)
(72) Inventor: MAKI, Masahiro, Matsushita Electric Ind. Co.;Ltd, Chuo-ku, Osaka-shi, Osaka 540-6319 (JP); WAKISAKA, T , Matsushita Electric Ind. Co.;Ltd, Chuo-ku, Osaka-shi, Osaka 540-6319 (JP); HANADA Tsunehiro, Matsushita Electric Ind. Co.;Ltd, Chuo-ku, Osaka-shi, Osaka 540-6319 (JP); OISHI Mutsuhiko, Matsushita Electric Ind. Co.;Ltd, Chuo-ku, Osaka-shi, Osaka 540-6319 (JP); ICHIHARA, Fumio c/o Matsushita Electric Industrial, Chuo-ku, Osaka-shi, Osaka 540-6319 (JP); YAMASHITA, Akihiro c/o Matsushita Electric Indust., Chuo-ku, Osaka-shi, Osaka 540-6319 (JP); IGATA, Yuji c/o Matsushita Electric Industrial Ltd, Chuo-ku, Osaka-shi, Osaka 540-6319 (JP)
(74) Representative: Pautex Schneider, Nicole Véronique
(86) International application number: PCT/JP2005/004862
(87) International publication number: WO 2005/091521

(57) **Abstract**

In a balanced transmission system of the present invention, one transmitter (10) and a plurality of receivers (20a) to (20n) are connected to a balanced transmission line using a cable of a single pair or multi pairs. A managing device (30) is connected to a transmitter via a transmitting-side communication path (51), and is connected to each of the plurality of receivers (20a) to (20n) via a receiving-side communication path (52). Balancing of transmission output and input balancing of a received signal are monitored. Based on the information, the managing device (30) controls transmission output to be fed into cables (41) and (42) of the transmitter (10) respectively. Furthermore, balancing of a received signal is controlled. As a result, it is possible to lessen an EMC issue resulting from unbalancing of a transmission line, and to improve communication quality.

## Description

### Technical Field

The present invention relates to a balanced transmission system operable to transmit a signal using a balanced transmission line that is composed of a single pair or multi pairs of cables.

### Background Art

There is a power line communication system operable to perform data transmission with a high frequency signal superimposed on a single pair of metallic cables which is used for power transmission. For example, with the rapid development of home information appliances, when interconnecting a plurality of computers or connecting a computer and another home information appliance at home, power line communication using an existing power line without installing a new cable has attracted a considerable attention.

When performing data transmission using such a single pair of metallic cables, an issue is EMC (Electromagnetic Compatibility) that arises from unbalancing of the single pair of metallic cables to be use as a transmission line.

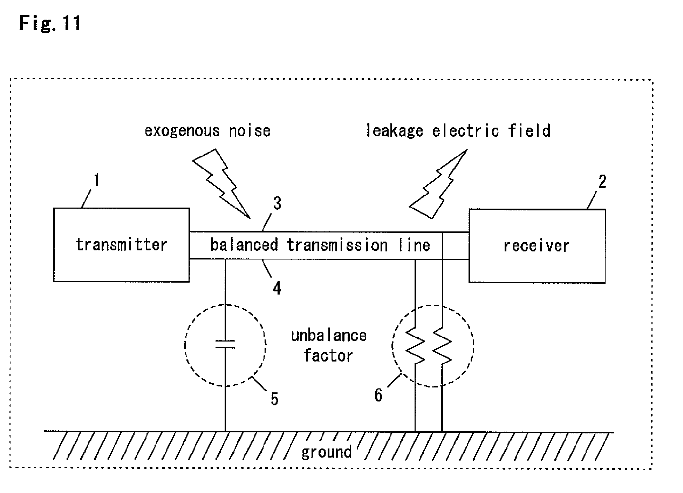

Fig. 11 is a schematic diagram of a balanced transmission system according to the conventional art. In Fig. 11, a transmitter 1 and a receiver 2 perform data transmission via a cable 3 and a cable 4 that are composed of metallic cables. Originally, the balanced transmission system is required to be completely balanced from the transmitter 1 to the receiver 2. However, in a practical sense, it is hard to say the balanced transmission system is completely balanced because there is unbalance factors in a transmitting circuit unit and a receiving circuit unit, and unbalance components in the middle of the cables, etc.

The above-mentioned EMC issue arises from such imperfect balancing of the balanced transmission system.

The EMC issue includes two kinds of influences: an influence which a leakage electric field from the cable 3 and the cable 4 gives to the other appliances and an influence which exogenous noises coming from the other appliances to the cable 3 and the cable 4 gives to the concerned balanced transmission system. For example, to the leakage electric field or the exogenous noises, stray capacitance 5 located between the cable 4 and the ground, and leakage resistance 6 located between the cable 3 and the ground and between the cable 4 and the ground, act as unbalance factors. As a result, balancing of the transmission line deteriorates. Therefore, such phenomena bring about problematic issues, such as increase in leakage electric field from the cable 3 and the cable 4, or incapability of canceling the exogenous noises entered in the cable 3 and the cable 4. These issues are well described in Document 1 ("Electromagnetic noise problem and countermeasures in communication system", published by Morikita Shuppan on November 25, 1997).

The prior art can not fully handle the above-mentioned issues, since it is necessary to consider the entire balanced transmission system in order to solve the issues.

An object of the present invention is to provide a balanced transmission system operable to reduce influence of an EMC issue due to unbalance of a transmission line, and the related art thereto.

### Disclosure of the Invention

A first aspect of the present invention provides a balanced transmission system operable to transmit signals using a balanced transmission line composed of a pair of cables, the balanced transmission system comprising: a transmitter connected to the balanced transmission line; a plurality of receivers, each of the plurality of receivers being connected to the balanced transmission line; and a managing device operable to communicate with the transmitter. The managing device controls transmission output fed by the transmitter to each of the pair of cables of the balanced transmission line, based on information on transmission balancing indicative of balancing of the transmission output fed by the transmitter to each of the pair of cables.

According to the present structure, the balancing of the transmission output at the transmitting point can be maintained without depending on the balancing of the balanced transmission line, by monitoring the balancing of the transmission output at the transmitting point and controlling the transmission output to be fed by the transmitter into each of the pair of cables of the balanced transmission line based on the information on transmission balancing indicative of the monitored balancing of the transmission output. Thereby, the EMC issue on the transmitter side can be lessened.

A second aspect of the present invention provides a balanced transmission system operable to transmit signals using a balanced transmission line composed of a pair of cables, the balanced transmission system comprising: a transmitter connected to the balanced transmission line; a plurality of receivers, each of the plurality of receivers being connected to the balanced transmission line; and a managing device operable to communicate with the transmitter and the plurality of receivers. The managing device controls input balancing of received signals received by the plurality of receivers, based on information on transmission balancing indicative of balancing of transmission output fed by the transmitter to each of the pair of cables.

According to the present structure, the input balancing of the input signal can be improved in each of the plurality of receivers even when an unbalanced state occurs at the transmitting point, by monitoring the balancing of the transmission output at the transmitting point and controlling the input balancing of the received signals received by the plurality of receivers, based on the information on transmission balancing indicative of the monitored balancing of the transmission output.

A third aspect of the present invention provides a balanced transmission system operable to transmit signals using a balanced transmission line composed of a pair of cables, the balanced transmission system comprising: a transmitter connected to the balanced transmission line; a plurality of receivers, each of the plurality of receivers being connected to the balanced transmission line; and a managing device operable to communicate with the transmitter and the plurality of receivers. The managing device controls transmission output fed by the transmitter to each of the pair of cables of the balanced transmission line and input balancing of received signals received by the plurality of receivers, based on information on transmission balancing indicative of balancing of the transmission output fed by the transmitter to each of the pair of cables.

According to the present structure, the balancing of the transmission output at the transmitting point can be maintained without depending on the balancing of the balanced transmission line, by monitoring the balancing of the transmission output at the transmitting point and controlling the transmission output to be fed by the transmitter into each of the pair of cables of the balanced transmission line based on the information on transmission balancing indicative of the monitored balancing of the transmission output. Thereby, the EMC issue on the transmitter side can be lessened. At the same time, in the plurality of receivers, the unbalance state occurred at the transmitting point can be improved, by controlling the input balancing of the received signals received by the plurality of receivers based on the information on transmission balancing.

A fourth aspect of the present invention provides a balanced transmission system operable to transmit signals using a balanced transmission line composed of a pair of cables, the balanced transmission system comprising: a transmitter connected to the balanced transmission line; a plurality of receivers, each of the plurality of receivers being connected to the balanced transmission line; and a managing device operable to communicate with the transmitter and the plurality of receivers. The managing device controls transmission output fed by the transmitter to each of the pair of cables of the balanced transmission line, based on information on reception balancing indicative of input balancing of received signals received by the plurality of receivers.

According to the present structure, the input balancing of the received signals received by the plurality of receivers can be improved comprehensively with simultaneous consideration given to the EMC issue on the transmitter side, by monitoring the input balancing of the received signals received by the plurality of receivers, and controlling the transmission output to be fed by the transmitter into each of the pair of cables of the balanced transmission line based on the information on reception balancing indicative of the monitored input balancing.

A fifth aspect of the present invention provides a balanced transmission system operable to transmit signals using a balanced transmission line composed of a pair of cables, the balanced transmission system comprising: a transmitter connected to the balanced transmission line; a plurality of receivers, each of the plurality of receivers being connected to the balanced transmission line; and a managing device operable to communicate with the plurality of receivers. The managing device controls input balancing of received signals received by the plurality of receivers, based on information on reception balancing indicative of the input balancing of the received signals.

According to the present structure, the balancing at the receiving point can be improved against the unbalanced state at the receiving point, by monitoring the input balancing of the received signals received by the plurality of receivers, and controlling the input balancing of the received signals received by the plurality of receivers, based on the information on reception balancing indicative of the monitored input balancing.

A sixth aspect of the present invention provides a balanced transmission system operable to transmit signals using a balanced transmission line composed of a pair of cables, the balanced transmission system comprising: a transmitter connected to the balanced transmission line; a plurality of receivers, each of the plurality of receivers being connected to the balanced transmission line; and a managing device operable to communicate with the transmitter and the plurality of receivers. The managing device controls transmission output fed by the transmitter to each of the pair of cables of the balanced transmission line and input balancing of received signals received by the plurality of receivers, based on information on reception balancing indicative of the input balancing of the received signals.

According to the present structure, the input balancing of the received signals received by the plurality of receivers can be improved comprehensively with simultaneous consideration given to the EMC issue on the transmitter side, by monitoring the input balancing of the received signals received by the plurality of receivers, and controlling the transmission output to be fed by the transmitter into each of the pair of cables of the balanced transmission line, based on the information on reception balancing indicative of the monitored input balancing. Furthermore, the unbalanced state can be improved more finely, by controlling the input balancing of the received signal received by each receiver, based on the information on reception balancing in each of the plurality of receivers.

A seventh aspect of the present invention provides a balanced transmission system operable to transmit signals using a balanced transmission line composed of a pair of cables, the balanced transmission system comprising: a transmitter connected to the balanced transmission line; a plurality of receivers, each of the plurality of receivers being connected to the balanced transmission line; and a managing device operable to communicate with the transmitter and the plurality of receivers. The managing device controls transmission output fed by the transmitter to each of the pair of cables of the balanced transmission line, based on information on transmission balancing indicative of balancing of the transmission output fed by the transmitter to each of the pair of cables and on information on reception balancing indicative of input balancing of received signals received by the plurality of receivers.

According to the present structure, the input balancing of the received signals received by each of the plurality of receivers can be improved with simultaneous consideration given to the EMC issue on the transmitter side, by controlling the transmission output to be fed by the transmitter into each of the pair of cables of the balanced transmission line, based on the information on transmission balancing acquired by monitoring the balancing of the transmission output at the transmitting point and on the information on reception balancing acquired by monitoring the input balancing of the received signals received by the plurality of receivers.

An eighth aspect of the present invention provides a balanced transmission system operable to transmit signals using a balanced transmission line composed of a pair of cables, the balanced transmission system comprising: a transmitter connected to the balanced transmission line; a plurality of receivers, each of the plurality of receivers being connected to the balanced transmission line; and a managing device operable to communicate with the transmitter and the plurality of receivers. The managing device controls input balancing of received signals received by the plurality of receivers, based on information on transmission balancing indicative of balancing of transmission output fed by the transmitter to each of the pair of cables and on information on reception balancing indicative of the input balancing of the received signals received by the plurality of receivers.

According to the present structure, the balancing at the receiving point can be improved against the unbalanced state at the receiving point, by controlling the input balancing of the received signals received by the plurality of receivers, based on the information on transmission balancing acquired by monitoring the balancing of the transmission output at the transmitting point and on the information on reception balancing acquired by monitoring the input balancing of the received signals received by the plurality of receivers.

A ninth aspect of the present invention provides a balanced transmission system operable to transmit signals using a balanced transmission line composed of a pair of cables, the balanced transmission system comprising: a transmitter connected to the balanced transmission line; a plurality of receivers, each of the plurality of receivers being connected to the balanced transmission line; and a managing device operable to communicate with the transmitter and the plurality of receivers. The managing device controls transmission output fed by the transmitter to each of the pair of cables of the balanced transmission line and input balancing of received signals received by the plurality of receivers, based on information on transmission balancing indicative of balancing of the transmission output fed by the transmitter to each of the pair of cables and on information on reception balancing indicative of the input balancing of the received signals received by the plurality of receivers.

According to the present structure, the input balancing of the received signals received by the plurality of receivers can be improved comprehensively with simultaneous consideration given to the EMC issue on the transmitter side, by controlling the transmission output to be fed by the transmitter into each of the pair of cables of the balanced transmission line, based on the information on transmission balancing acquired by monitoring the balancing of the transmission output at the transmitting point and on the information on reception balancing acquired by monitoring the input balancing of the received signals received by the plurality of receivers. Furthermore, the unbalanced state can be improved more finely, by controlling the input balancing of the received signal received by each receiver, based on the information on reception balancing in each of the plurality of receivers.

A thirteenth aspect of the present invention provides the balanced transmission system, wherein the transmitter comprises a transmitter monitoring unit operable to monitor the transmission balancing indicative of the balancing of the transmission output fed by the transmitter to each of the pair of cables.

According to the present structure, the balancing of the transmission output of the transmitter can be monitored on the transmitter side.

A fourteenth aspect of the present invention provides the balanced transmission system, wherein the transmitter comprises a transmission control unit operable to control the transmission output to be fed to each of the pair of cables of the balanced transmission line, based on control information sent from the managing device.

According to the present structure, the transmitter can control the transmission output to be fed into each of the pair of cables of the balanced transmission line according to the control information which the managing device has generated and sent, based on the information on transmission balancing or the information on reception balancing.

A fifteenth aspect of the present invention provides the balanced transmission system, wherein each of the plurality of receivers comprises a receiver monitoring unit operable to monitor input balancing of a received signal received by each of the plurality of receivers.

According to the present invention, each of the plurality of receivers can monitor input balancing of each received signal, thereby allowing the input balancing to be controlled more finely.

A sixteenth aspect of the present invention provides the balanced transmission system, wherein each of the plurality of receivers comprises a reception control unit operable to control input balancing of a received signal received by each of the plurality of receivers, based on control information sent from the managing device.

According to the present invention, each of the plurality of receivers can control the input balancing of each received signal according to the control information which the managing device has generated and sent, based on the information on transmission balancing or the information on reception balancing, thereby allowing the input balancing to be controlled more finely

A nineteenth to twenty-first aspects of the present invention provide the balanced transmission system, wherein the managing device is operable to communicate with the transmitter and at least one of the plurality of receivers, using the balanced transmission line, a wired LAN, or a wireless LAN.

According to the present structure, the managing device can always communicate with the transmitter or the receiver on the information on balancing and the control information to control the balancing. Especially when communication is performed by using the balanced transmission line, conveniently, it is unnecessary to establish a new communication path.

A twenty-second aspect of the present invention provides the balanced transmission system, wherein the managing device is operable to control transmission output in at least a part of a frequency band, the frequency band being used for transmitting signals.

According to the present structure, since the transmission output is controllable in an arbitrary part of the frequency band used for transmitting signals, it is possible to perform flexible transmitting control in controlling selectively a part of the frequency band with poor balancing. It is especially effective in a multicarrier transmission signal, of which multiplexing is practiced on the frequency axis.

A twenty-third aspect of the present invention provides the balanced transmission system, wherein the managing device comprises a band dividing unit operable to divide the frequency band used for transmitting signals into a plurality of divided bands.

According to the present structure, the transmission output can be controlled to the plurality of divided bands, which the frequency band used for transmitting signals is divided. The transmission output can be suitably controlled, adjusting to the balancing which differs for every divided band.

A twenty-fourth aspect of the present invention provides the balanced transmission system, wherein the band dividing unit is operable to further divide one of the plurality of divided bands into a plurality of sub-divided bands, the one of the plurality of divided bands being a band in which a change in the balancing of the transmission output is greater than a predetermined value.

According to the present structure, the balancing of a band in which the change of the balancing is extremely large can be grasped more minutely. Furthermore, it is possible to realize more suitable control of the transmission output according to the minutely-grasped balancing change.

A twenty-fifth aspect of the present invention provides the balanced transmission system, wherein the managing device is operable to control transmission output for each of the plurality of divided bands divided by the band dividing unit.

According to the present structure, it is possible to control the transmission output according to the balancing change that differs for every divided band; therefore, the control of the transmission output can be performed according to the situation, such as a divided band with a small balancing change or a divided band with a large balancing change.

A twenty-sixth aspect of the present invention provides the balanced transmission system, wherein the managing device further comprises a control band selecting unit operable to select, from the plurality of divided bands, a control band for which the transmission output is controlled, and wherein the managing device is operable to control the transmission output in the control band selected by the control band selecting unit.

According to the present structure, it is possible to select, as a control band, a divided band which is in a special state such as the balancing level is extremely low, from the divided bands that are divided, and to control the transmission output to the selected control band. Thereby, it becomes possible to satisfy both of reducing the load of the transmission output control and controlling the transmission output according to the balancing change.

A twenty-seventh aspect of the present invention provides the balanced transmission system, wherein the control band selecting unit selects one of the plurality of divided bands as the control band, the one of the plurality of divided bands being a band in which a change in the balancing of the transmission output is greater than a predetermined value.

According to the present structure, it is possible to suitably select a divided band to which the control is performed, and also possible to perform the efficient control with a reduced load of the transmission output control.

A twenty-eighth aspect of the present invention provides the balanced transmission system, wherein the control band selecting unit selects the control band from the plurality of divided bands, in accordance with weighting coefficients allotted respectively to the plurality of divided bands.

According to the present structure, it is possible to select a specific band, such as a band in which the balancing is empirically deteriorated due to interference with the other electric wave signals, and a band which requires special control according to specifications, according to a user demand and actual deterioration in balancing. Thereby, it is possible to perform the control with high usability.

A twenty-ninth aspect of the present invention provides the balanced transmission system, wherein the control of the transmission output is performed by the transmitter.

According to the present structure, the control of the transmission output to at least a part of the frequency band or one of the divided bands can be performed in the transmitter.

A thirtieth aspect of the present invention provides the balanced transmission system, wherein the managing device is operable to control input balancing in at least a part of a frequency band, the frequency band being used for transmitting signals.

According to the present structure, since the input balancing can be controlled to an arbitrary part of the frequency band used for transmitting signals, it is possible to perform flexible reception control such that a band with poor balancing is selectively controlled. It is especially effective in a multicarrier transmission signal, of which multiplexing is practiced on the frequency axis.

A thirty-first aspect of the present invention provides the balanced transmission system, wherein the managing device comprises a band dividing unit operable to divide the frequency band used for transmitting signals into a plurality of divided bands.

According to the present structure, the input balancing can be controlled to the divided bands of the frequency band used for transmitting signals. Thereby, it is possible to realize the control of the input balancing with a suitable adjustment to the different balancing for every divided band.

A thirty-second aspect of the present invention provides the balanced transmission system, wherein the band dividing unit is operable to further divide one of the plurality of divided bands into a plurality of sub-divided bands, the one of the plurality of divided bands being a band in which a change in the balancing of the transmission output is greater than a predetermined value.

According to the present structure, the balancing of a band in which the change of the balancing is extremely large can be grasped more minutely. Furthermore, it is possible to realize more suitable control of the input balancing according to the minutely-grasped balancing change.

A thirty-third aspect of the present invention provides the balanced transmission system, wherein the managing device is operable to control input balancing for each of the plurality of divided bands divided by the band dividing unit.

According to the present structure, it is possible to control the input balancing according to the balancing change that differs for every divided band; therefore, the control of the input balancing can be performed according to the situation, such as a divided band with a small balancing change or a divided band with a large balancing change.

A thirty-fourth aspect of the present invention provides the balanced transmission system, wherein the managing device further comprises a control band selecting unit operable to select, from the plurality of divided bands, a control band for which the input balancing is controlled, and wherein the managing device is operable to control the input balancing in the control band selected by the control band selecting unit.

According to the present structure, it is possible to select a divided band from the divided bands, as a control band, which is in a special state such that the balancing level is extremely low, and to control the input balancing to the selected control band. Thereby, it becomes possible to satisfy both of reducing the load of the input balancing control and controlling the input balancing according to the change of balancing.

A thirty-fifth aspect of the present invention provides the balanced transmission system, wherein the control band selecting unit selects one of the plurality of divided bands as the control band, the one of the plurality of divided bands being a band in which a change in the balancing of the transmission output is greater than a predetermined value.

According to the present structure, it is possible to suitably select a divided band to which the control is performed, and also possible to perform the efficient control with reduced load of the input balancing control.

A thirty-sixth aspect of the present invention provides the balanced transmission system, wherein the control band selecting unit selects the control band from the plurality of divided bands, in accordance with weighting coefficients allotted respectively to the plurality of divided bands.

According to the present structure, it is possible to select a specific band, such as a band in which the balancing is empirically deteriorated due to interference with the other electric wave signals, and a band which requires special control according to specifications, according to a user demand and actual deterioration in balancing. Thereby, it is possible to perform the control with high usability.

A thirty-seventh aspect of the present invention provides the balanced transmission system, wherein the control of the input balancing is performed by the receiver.

According to the present structure, in the receiver, the control of the input balancing to at least a part of the frequency band or one of the divided bands can be performed.

A thirty-eighth aspect of the present invention provides a communication device operable to communicate using a balanced transmission line composed of a pair of cables, wherein the communication device controls at least one of transmission output fed by the communication device to each of the pair of cables of the balanced transmission line and input balancing of received signals received by the communication device, based on at least one of information on transmission balancing indicative of balancing of the transmission output fed by the communication device to each of the pair of cables and information on reception balancing indicative of the input balancing of the received signals received by the communication device.

According to the present structure, the balanced transmission system may comprise at least one of a transmitter possessing the function practiced by the managing device and a receiver possessing the function practiced by the managing device. Therefore, the structure of the balanced transmission system becomes simple, and conveniently, it is unnecessary to install another managing device.

### Brief Description of the Drawings

Fig. 1 is a block diagram of a balanced transmission system in Embodiment 1 of the present invention;
Fig. 2 is a circuit block diagram of the balanced transmission system in Embodiment 1 of the present invention;
Fig. 3 is a block diagram of a balanced transmission system in Embodiment 2 of the present invention;
Fig. 4 is a block diagram of a balanced transmission system in Embodiment 3 of the present invention;
Fig. 5 is a block diagram of a balanced transmission system in Embodiment 4 of the present invention;
Fig. 6 is a block diagram of a balanced transmission system in Embodiment 5 of the present invention;
Fig. 7 is a block diagram of a balanced transmission system in Embodiment 6 of the present invention;
Fig. 8 is a block diagram of a balanced transmission system in Embodiment 7 of the present invention;
Fig. 9 is a block diagram of a simplified balanced transmission system of Embodiment 2 of the present invention;
Fig. 10 is a block diagram of a simplified balanced transmission system of Embodiment 4 of the present invention;
Fig. 11 is a schematic diagram of the conventional balanced transmission system;
Fig. 12 is a block diagram of a balanced transmission system in Embodiment 8 of the present invention;
Fig. 13 illustrates a frequency characteristic of signals processed by the balanced transmission system in Embodiment 8 of the present invention;
Fig. 14 illustrates a frequency characteristic of signals processed by the balanced transmission system in Embodiment 8 of the present invention;
Fig. 15 is a block diagram of the balanced transmission system in Embodiment 8 of the present invention;
Fig. 16 is a block diagram of the balanced transmission system in Embodiment 8 of the present invention;
Fig. 17 is a block diagram of the balanced transmission system in Embodiment 8 of the present invention;
Fig. 18 is a block diagram of the balanced transmission system in Embodiment 8 of the present invention;
Fig. 19 is a block diagram of a control band selecting unit in Embodiment 8 of the present invention;
Fig. 20 illustrates a signal vs. frequency characteristic explaining selection of a control band in Embodiment 8 of the present invention;
Fig. 21 is a block diagram of the balanced transmission system in Embodiment 8 of the present invention;
Fig. 22 is a block diagram of the balanced transmission system in Embodiment 8 of the present invention;
Fig. 23 is a block diagram of the balanced transmission system in Embodiment 8 of the present invention; and
Fig. 24 is a block diagram of the balanced transmission system in Embodiment 8 of the present invention.

### Best Mode for Carrying out the Invention

Hereinafter, embodiments of the present invention are explained referring to the accompanying drawings.

### Embodiment 1

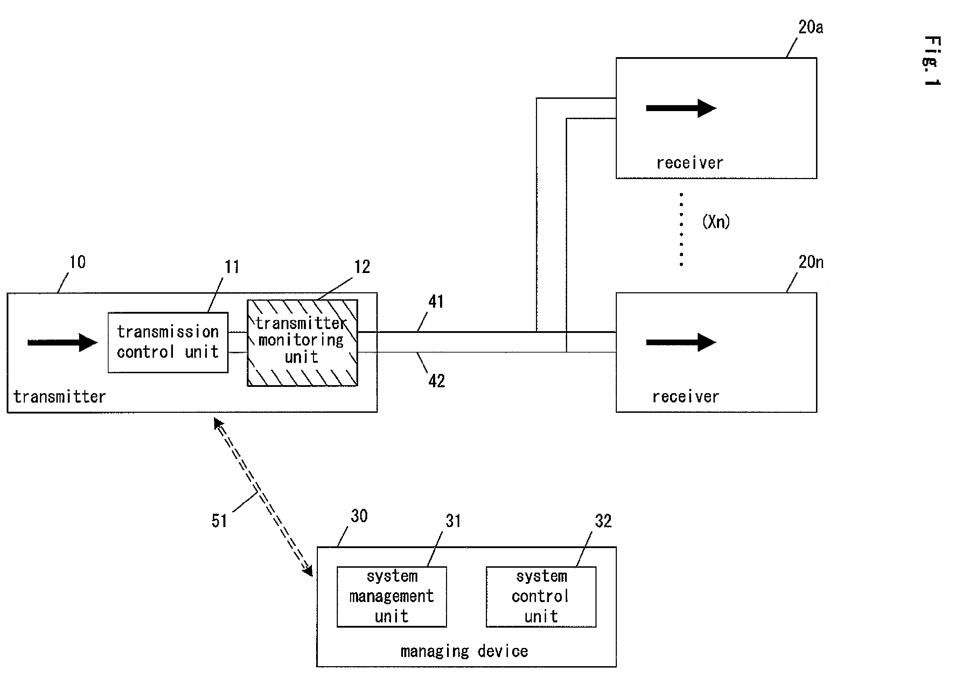

Fig. 1 is a block diagram of a balanced transmission system in Embodiment 1 of the present invention.

As shown in Fig. 1, in the balanced transmission system of the present embodiment, a transmitter 10 and a plurality of receivers 20a to 20n are connected to a balanced transmission line that is composed of a cable 41 and a cable 42. A managing device 30 is connected to the transmitter 10 via a transmitting-side communication path 51. The transmitter 10 includes a transmission control unit 11 and a transmitter monitoring unit 12. The managing device 30 includes a system management unit 31 and a system control unit 32.

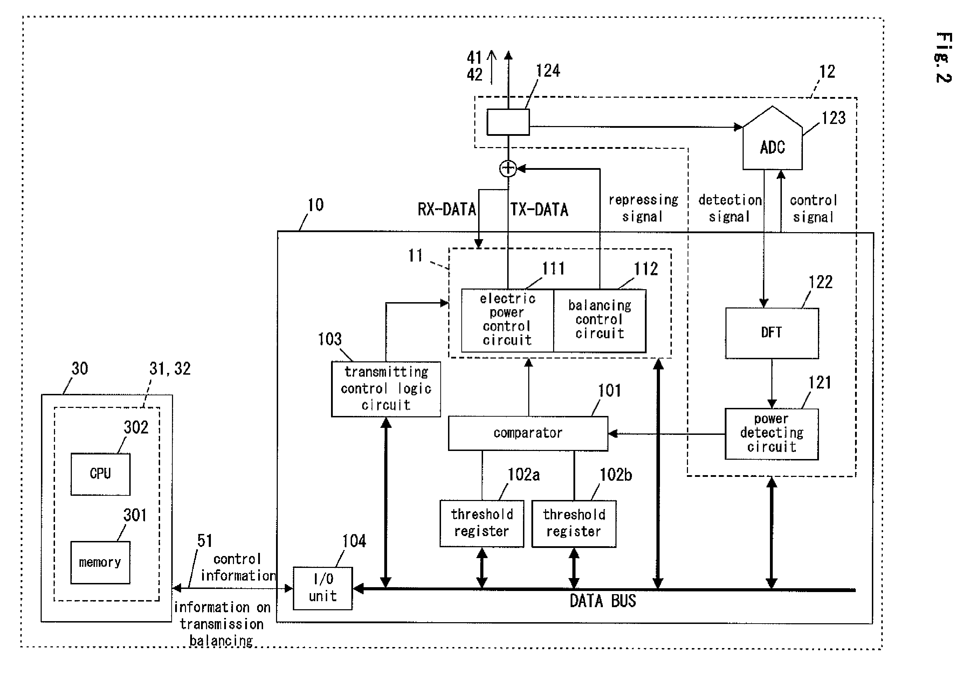

Next, a concrete circuit structure, which constitutes the balanced transmission system, is explained referring to Fig. 2. Fig. 2 is a circuit block diagram of the balanced transmission system in Embodiment 1 of the present invention.

As shown in Fig. 2, the balanced transmission system comprises the transmitter 10 and the managing device 30, same as in Fig. 1. The transmitter 10 and the managing device 30 are connected via the transmitting-side communication path 51.

As shown in Fig. 2, the transmitter 10 includes the transmission control unit 11, the transmitter monitoring unit 12, a comparator 101, threshold registers 102a and 102b, and I/O (Input/Output) unit 104. The transmission control unit 11 includes an electric power control circuit 111, a balancing control circuit 112, and so on. The transmitter monitoring unit 12 includes a power detecting circuit 121, a DFT (Discrete Fourier Transform) 122, an ADC (Analog Digital Converter) 123, and so on

On the other hand, as in Fig. 1, the managing device 30 includes the system management unit 31, the system control unit 32, a CPU (Central Processing Unit) 301, a memory 302, and so on. The memory 302 stores management information.

In the following explanation, the plurality of the receivers 20a to 20n are collectively called as a receiver 20.

The following explains operation of the balanced transmission system of the present embodiment.

A signal to be transmitted from the transmitter 10 to the receiver 20 is outputted as the transmission output from the transmission control unit 11, and is fed into the cable 41 and the cable 42 via the transmitter monitoring unit 12. Immediately after communication starts, the transmission output to be fed into each of the cable 41 and the cable 42b is determined according to the predetermined condition. For example, the transmission control unit 11 outputs the transmission output of a comparatively small amplitude to the cable 41 and the cable 42, in order to reduce influence of momentary unwanted radiation immediately after the communication starts.

At the time when the transmission output is fed into the cable 41 and the cable 42, the transmitter monitoring unit 12 monitors the balancing of the transmission output in the cable 41 and the cable 42, generates information on transmission balancing related to the balancing of the transmission output based on the monitored result, and sends the information to the managing device 30 via the transmitting-side communication path 51.

In the managing device 30, the system management unit 31 manages the information on transmission balancing transmitted from the transmitter 10, and the other pieces of management information related to the concerned balanced transmission system. The management is system management for lessening the EMC issue of the concerned balanced transmission system as much as possible. In pursuant to the instruction of the system management unit 31, the system control unit 32 generates control information which the transmitter 10 uses in controlling the balancing of the transmission output, and then transmits the information to the transmitter 10 via the transmitting-side communication path 51.

The transmission control unit 11 of the transmitter 10 controls the transmission output to be fed into the cable 41 and the cable 42 based on the control information transmitted from the managing device 30.

The following explains operation of such a balanced transmission system in detail referring to Fig. 2.

First, a transmitting control logic circuit 103 of the transmitter 10 outputs transmitting data TX-DATA via the transmission control unit 11. After receiving the output, an ADC 123 detects an unbalanced signal, which is transmitted to the cable 41 and the cable 42 through a transformer 124, and performs analog-to-digital conversion to the unbalanced signal. Furthermore, the ADC 123 outputs the unbalanced signal after the analog-to-digital conversion to the DFT 122 as a detection signal. The DFT 122 performs Fourier transform to the converted digital detection signal, and then outputs frequency data to the power detecting circuit 121. The power detecting circuit 121 detects the power of each carrier from the inputted frequency data, and then outputs the power to the comparator 101 as power data. Based on the inputted power data, the comparator 101 reads a predetermined power threshold from the threshold registers 102a and 102b, and compares the power and the power threshold of each carrier. The comparator 101 outputs the comparison result as the information on transmission balancing to the transmitting-side communication path 51 via the I/O unit 104.

When the CPU 301 of the managing device 30 receives the information on transmission balancing that is transmitted from the transmitting-side communication path 51, the CPU 301 of the managing device 30 reads management information from the ROM 302. The management information indicates the maximum permissible value of the power corresponding to each frequency band (for example, a power value regulated by the Radio Law). Based on the read management information and the information on transmission balancing, the CPU 301 generates control information indicating a carrier to which the balancing should be controlled and the control level thereof, and then outputs the control information to the transmitting-side communication path 51.

The control information is inputted into the balancing control circuit 112 of the transmission control unit 11.

Based on the inputted control information, the balancing control circuit 112 controls the balancing by superimposing a repressing signal to the transmitted signal. The repressing signal is a signal which is controlled to a suitable plus or minus level (for example, a current value [µA]). Alternatively, it is also possible for an electric power control circuit 111 of the transmission control unit 11 to control the power of the transmitted signal upon receiving the control information, thereby controlling the unbalanced current.

Thus, in the balanced transmission system of the present embodiment, the managing device 30 monitors the balancing of the transmission output at the transmitting point, and generates control information based on the information on transmission balancing. According to the control information, the transmitter controls the transmission output to be fed into each of the pair of cables of the balanced transmission line such that the improvement is obtained for the balancing at the outputting point of the transmitter. As a result, the balance of the transmission output at the transmitting point can be maintained without depending on the balancing of the transmission line; therefore, the EMC issue in the transmitter side can be lessened.

The transmitting-side communication path 51 of the present embodiment may use the balanced transmission line which the present balanced transmission system uses for transmitting signals. In this case, the managing device 30 is connected to the cable 41 and the cable 42 as the receiver 20 is connected. Alternatively, the transmitting-side communication path 51 of the present embodiment may use a wired or wireless LAN of another network different from the balanced transmission line that the present balanced transmission system uses for transmitting signals.

In the present embodiment, although the combination of one transmitter 10 and a plurality of receivers 20a to 20n is explained, the present invention can be applied to a combination of one transmitter 10 and one receiver. Moreover, in the present embodiment, although the managing device 30 is assumed to be an independent device, it is also preferable to use a transmitter in which the transmitter 10 and the managing device 30 are united.

### Embodiment 2

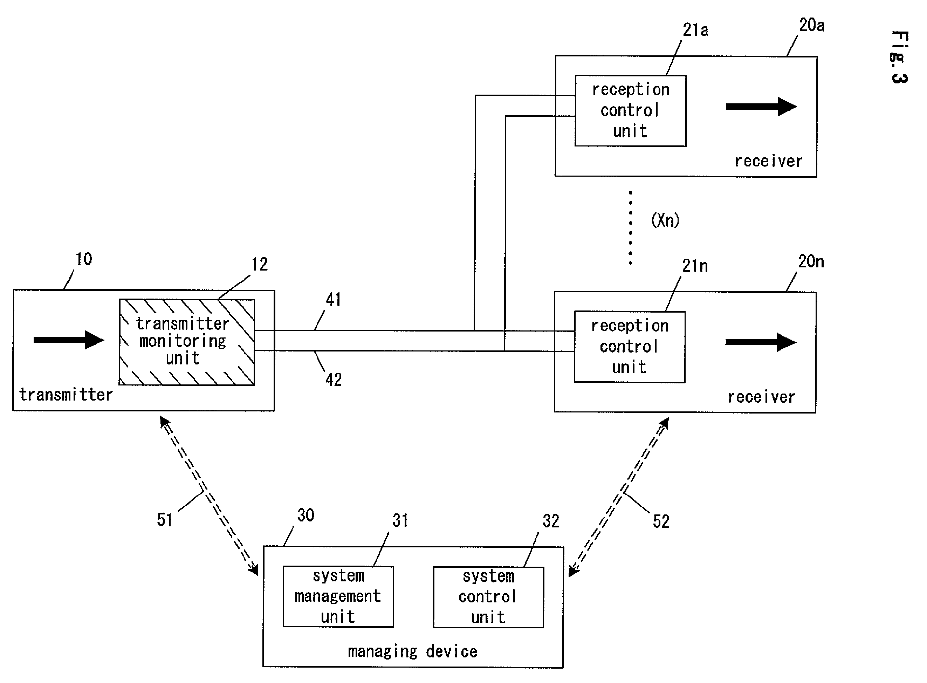

Fig. 3 is a block diagram of a balanced transmission system in Embodiment 2 of the present invention.

As shown in Fig. 3, in the balanced transmission system of the present embodiment, the balanced transmission line, which is composed of the cable 41 and the cable 42, is connected to one transmitter 10 and a plurality of the receivers 20a to 20n. The managing device 30 is connected to the transmitter 10 via the transmitting-side communication path 51 and to each of the receivers 20a to 20n via a receiving-side communication path 52. The transmitter 10 includes the transmitter monitoring unit 12. The receivers 20a to 20n include reception control units 21a to 21n, respectively. The managing device 30 includes the system management unit 31 and the system control unit 32. In the following explanation, the reception control units 21a to 21n are collectively called as a reception control unit 21.

The following explains operation of the balanced transmission system of the present embodiment.

A signal to be transmitted from the transmitter 10 to the receiver 20 is fed as transmission output to the cable 41 and the cable 42 via the transmitter monitoring unit 12. In the present embodiment, the transmitter 10 outputs the transmission output to each of the cable 41 and the cable 42 under the predetermined condition.

When the transmission output is fed into the cable 41 and the cable 42, the transmitter monitoring unit 12 monitors the balancing of the transmission output in the cable 41 and the cable 42, generates information on transmission balancing related to the balancing of the transmission output based on the monitored result, and then transmits the information to the managing device 30 via the transmitting-side communication path 51.

In the managing device 30, the system management unit 31 manages the information on transmission balancing that is transmitted from the transmitter 10, and the other pieces of management information related to the concerned balanced transmission system. The management is system management for lessening the EMC issue of the concerned balanced transmission system, and improving the balancing of the input signal in the receiver 20. According to the instruction of the system management unit 31, the system control unit 32 takes into consideration the balancing of the transmission line from the transmitter 10 to each of the receivers 20a to 20n, generates control information which each of the receivers 20a to 20n uses in controlling the input balancing of a received signal, and transmits the control information to each of the receivers 20a to 20n via the receiving-side communication path 52.

In each of the receivers 20a to 20n, based on the control information transmitted from the managing device 30, each of the reception control units 21a to 21n adjusts each input balancing such that the most improvement is obtained for the input balancing of the received signal that is received by each of the receivers 20a to 20n.

Thus, in the balanced transmission system of the present embodiment, the managing device 30 monitors the balancing of the transmission output at the transmitting point, and generates the control information based on the information on transmission balancing. According to the control information, each input balancing is adjusted such that the most improvement is obtained for the input balancing of the received signal that is received by each of the receivers 20a to 20n. As a result, it is possible to take the EMC measures and the input balancing measures, giving consideration to the balancing of the transmission line that connects the transmitter 10 and each of the receivers 20a to 20n.

The transmitting-side communication path 51 and the receiving-side communication path 52 of the present embodiment may use the balanced transmission line which the balanced transmission system uses for transmitting signals. In this case, the managing device 30 is connected to the cable 41 and the cable 42 as the receiver 20 is connected. Alternatively, the transmitting-side communication path 51 and the receiving-side communication path 52 of the present embodiment may use a wired or wireless LAN of another network different from the balanced transmission line that the present balanced transmission system uses for transmitting signals.

In the present embodiment, although the combination of one transmitter 10 and a plurality of the receivers 20a to 20n is explained, the present invention may be applied to a combination of one transmitter 10 and one receiver. Moreover, in the present embodiment, although the managing device 30 is assumed to be an independent device, it is also preferable to use a transmitter in which the transmitter 10 and the managing device 30 are united, or a receiver in which the receiver 20 and the managing device 30 are united.

### Embodiment 3

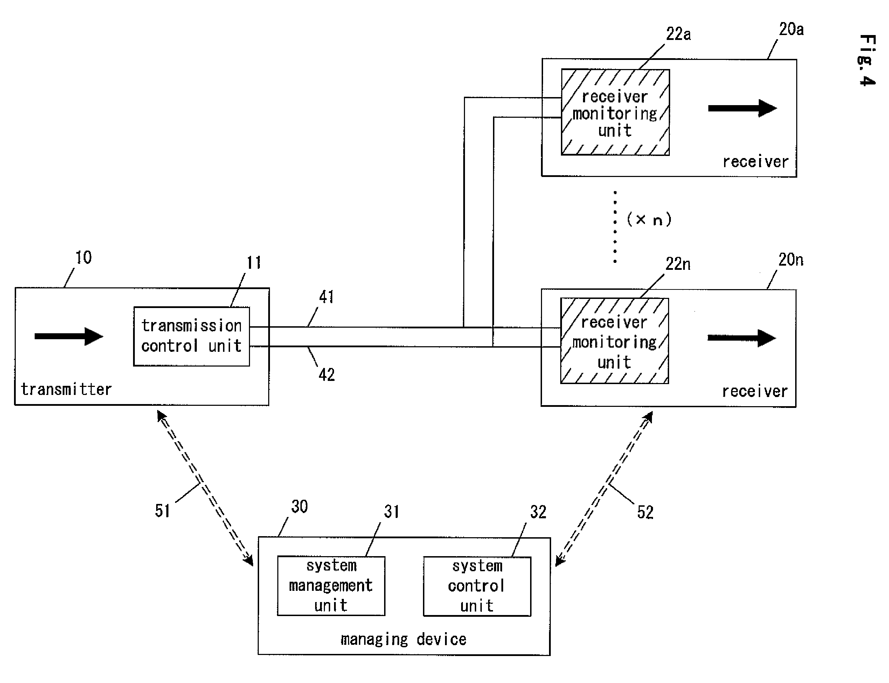

Fig. 4 is a block diagram of a balanced transmission system in Embodiment 3 of the present invention.

As shown in Fig. 4, in the balanced transmission system of the present embodiment, one transmitter 10 and a plurality of the receivers 20a to 20n are connected to the balanced transmission line that is composed of the cable 41 and the cable 42. The managing device 30 is connected to the transmitter 10 via the transmitting-side communication path 51 and to each of the receiver 20a to 20n via the receiving-side communication path 52. The transmitter 10 includes the transmission control unit 11. The receivers 20a to 20n respectively include the receiver monitoring units 22a to 22n. The managing device 30 includes the system management unit 31 and the system control unit 32. In the following explanation, the receiver monitoring units 22a to 22n are collectively called as a receiver monitoring unit 22.

The following explains operation of the balanced transmission system of the present embodiment.

A signal to be transmitted from the transmitter 10 to the receiver 20 is fed as transmission output into the cable 41 and the cable 42 from the transmission control unit 11. In the present embodiment, immediately after communication starts, the transmission output to be fed into each of the cable 41 and the cable 42 is determined according to the predetermined condition. For example, the transmission control unit 11 outputs the transmission output of a comparatively small amplitude to the cable 41 and the cable 42, in order to reduce influence of momentary unwanted radiation immediately after the communication starts and to increase the input balancing at each receiver 20.

When the transmission output is fed into the cable 41 and the cable 42, the receiver monitoring units 22a to 22n of the receivers 20a to 20n measure the input balancing of each received signal. The receiver monitoring units 22a to 22n generate information on reception balancing regarding the input balancing of the input signals based on the measurement result, and then transmits the information on reception balancing to the managing device 30 via the receiving-side communication path 52.

In the managing device 30, the system management unit 31 manages the information on reception balancing transmitted from the receivers 20a to 20n, and the other pieces of management information related to the concerned balanced transmission system. The management is system management for lessening the EMC issue of the concerned balanced transmission system, and improving the balancing of input signals in the receivers 20a to 20n. According to the instruction of the system management unit 31, the system control unit 32 considers the balancing of the transmission line from the transmitter 10 to each of the receivers 20a to 20n, and generates control information which the transmitter 10 uses in controlling the balancing of the transmission output. Then, the system control unit 32 transmits the control information to the transmitter 10 via the transmitting-side communication path 51.

The transmission control unit 11 of the transmitter 10 controls the transmission output fed into the cable 41 and the cable 42 based on the control information transmitted from the managing device 30.

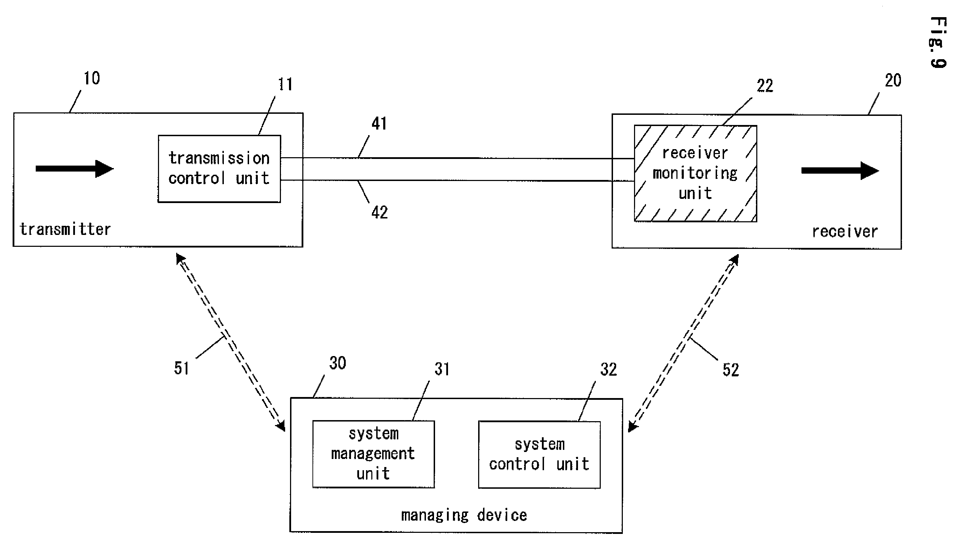

Fig. 9 is a block diagram of a simplified balanced transmission system of Embodiment 3 of the present invention. In the balanced transmission system of Fig. 9, the number of the receiver 20 is one. Except for the situation that there is one receiver 20, the operation of the present balanced transmission system is similar to that of the balanced transmission system of Fig. 4, as mentioned above; therefore, the explanation is omitted.

In the balanced transmission system of the present embodiment shown in Fig. 3, the managing device 30 monitors the input balancing of the received signals of each of the receivers 20a to 20n, and generates control information based on the information on reception balancing. According to the control information, the transmitter controls the transmission output to be fed into each of the pair of cables of the transmission lines such that the improvement is obtained for the balancing at the outputting point of transmitter and the input balancing of the received signals of the receiver 20. Therefore, according to the present embodiment, in consideration of the EMC issue in the transmitter side, the balancing of the received signals of the receiver 20 can be improved.

As in Embodiment 2, the transmitting-side communication path 51 and the receiving-side communication path 52 may use the balanced transmission line which the present balanced transmission system uses for transmitting signals. In this case, the managing device 30 is connected to the cable 41 and the cable 42 as the receiver 20 is connected. Alternatively, the transmitting-side communication path 51 and the receiving-side communication path 52 of the present embodiment may use a wired or wireless LAN of another network different from the balanced transmission line that the balanced transmission system uses for transmitting signals.

In the present embodiment, the combination of one transmitter 10 and a plurality of the receivers 20a to 20n is explained, and the combination of one transmitter 10 and one receiver 20 is also explained as a simplified embodiment. Moreover, in the present embodiment, although the managing device 30 is assumed to be an independent device, it is also preferable to use a transmitter in which the transmitter 10 and the managing device 30 are united, or a receiver in which the receiver 20 and the managing device 30 are united.

### Embodiment 4

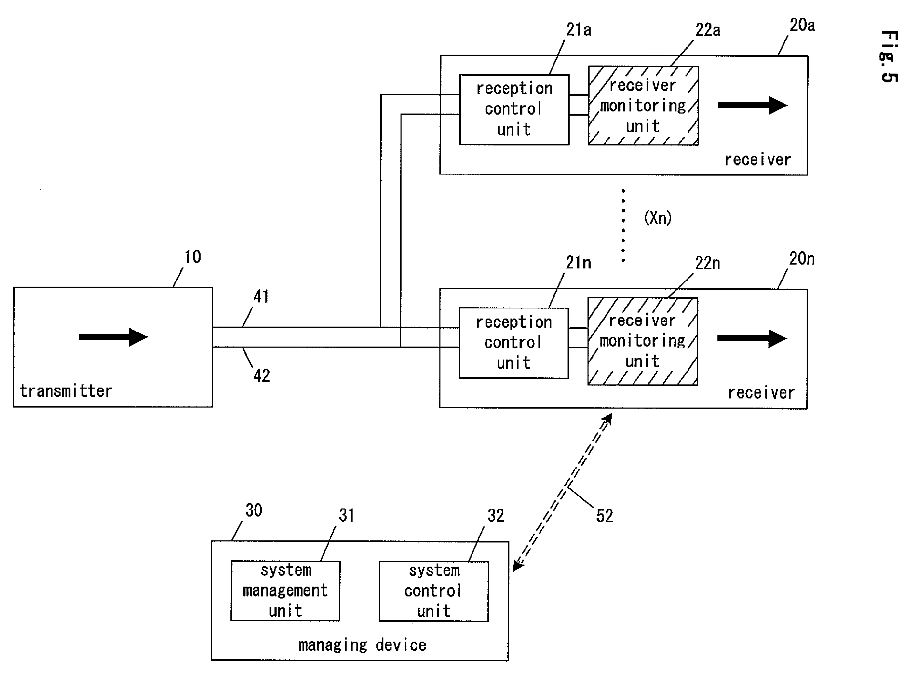

Fig. 5 is a block diagram of a balanced transmission system in Embodiment 4 of the present invention.

As shown in Fig. 5, in the balanced transmission system of the present embodiment, one transmitter 10 and a plurality of the receivers 20a to 20n are connected to the balanced transmission line that is composed of the cable 41 and the cable 42. The managing device 30 is connected to each of the receivers 20a to 20n via the receiving-side communication path 52. The receivers 20a to 20n include the reception control units 21a to 21n and the receiver monitoring units 22a to 22n, respectively. The managing device 30 includes the system management unit 31 and the system control unit 32.

The following explains operation of the balanced transmission system of the present embodiment.

A signal to be transmitted from the transmitter 10 to the receiver 20 is fed to the cable 41 and the cable 42 as transmission output under the predetermined condition. In the present embodiment, the transmission output, which is fed to the cable 41 and the cable 42 respectively, is set to a constant value in consideration of the EMC issue at the transmitting point and the reception balancing of the received signals in the receiver 20.

When the transmission output is fed into the cable 41 and the cable 42, the receiver monitoring units 22a to 22n of the receivers 20a to 20n measure the input balancing of each received signal, generate the information on reception balancing related to the input balancing of each input signal based on the measurement result, and then transmit the information on reception balancing to the managing device 30 via the receiving-side communication path 52.

In the managing device 30, the system management unit 31 manages the information on reception balancing transmitted from each of the receivers 20a to 20n and the other pieces of management information related to the concerned balanced transmission system. The management is system management for lessening the EMC issue of the concerned balanced transmission system and improving the balancing of input signals in the receiver 20. According to the instruction of the system management unit 31, the system control unit 32 considers the balancing of the transmission line from the transmitter 10 to each of the receivers 20a to 20n, and generates control information which each of the receivers 20a to 20n uses in controlling the input balancing of the received signal. Then, the system control unit 32 transmits the control information to the each of the receivers 20a to 20n via the receiving-side communication path 52.

In each of the receivers 20a to 20n, based on the control information transmitted from the managing device 30, each of the reception control units 21a to 21n adjusts each input balancing such that the most improvement is obtained for the input balancing of the received signal that is received by each of the receivers 21a to 21n.

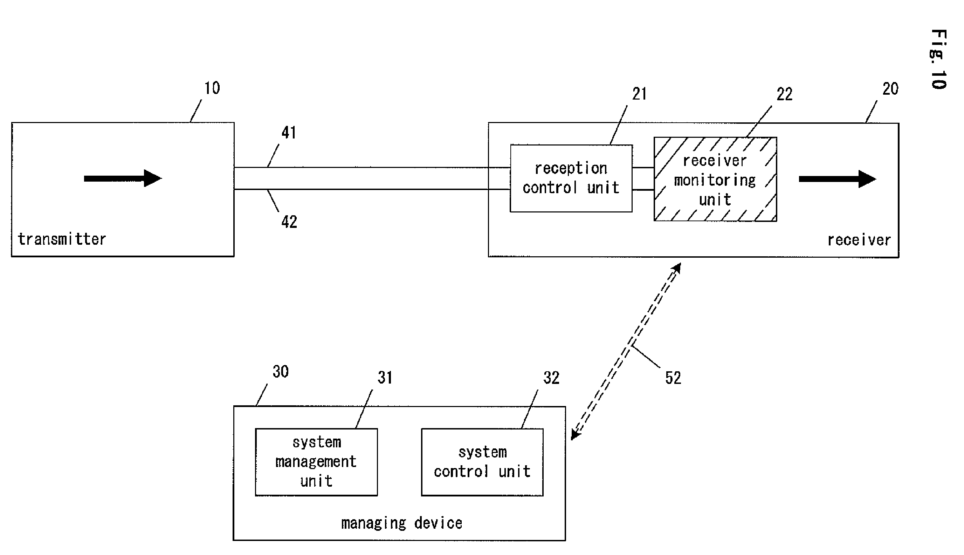

Fig. 10 is a block diagram of a simplified balanced transmission system of Embodiment 4 of the present invention. In the balanced transmission system of Fig. 10, the number of receiver 20 is one. Except for the situation that there is one receiver 20, the operation of the present balanced transmission system is similar to that of the balanced transmission system of Fig. 4, as mentioned above; therefore, the explanation is omitted.

Thus, in the balanced transmission system of the present embodiment, the managing device 30 monitors the input balancing of the received signals of each of the receivers 20a to 20n, and generates control information based on the information on reception balancing. According to the control information, each input balancing is adjusted such that the most improvement is obtained for the input balancing of the received signal that is received by each of the receivers 20a to 20n. As a result, it is possible to take the EMC measures and the input balancing measures, giving consideration to the balancing of the transmission line that connects the transmitter 10 and each of the receivers 20a to 20n.

The receiving-side communication path 52 of the present embodiment may use the balanced transmission line which the present balanced transmission system uses for transmitting signals. In this case, the managing device 30 is connected to the cable 41 and the cable 42 as the receiver 20 is. Alternatively, the transmitting-side communication path 52 of the present embodiment may use a wired or wireless LAN of another network different from the balanced transmission line that the present balanced transmission system uses for transmitting signals.

In the present embodiment, although the managing device 30 is assumed to be an independent device, it is also preferable to use a receiver in which the receiver 20 and the managing device 30 are united.

### Embodiment 5

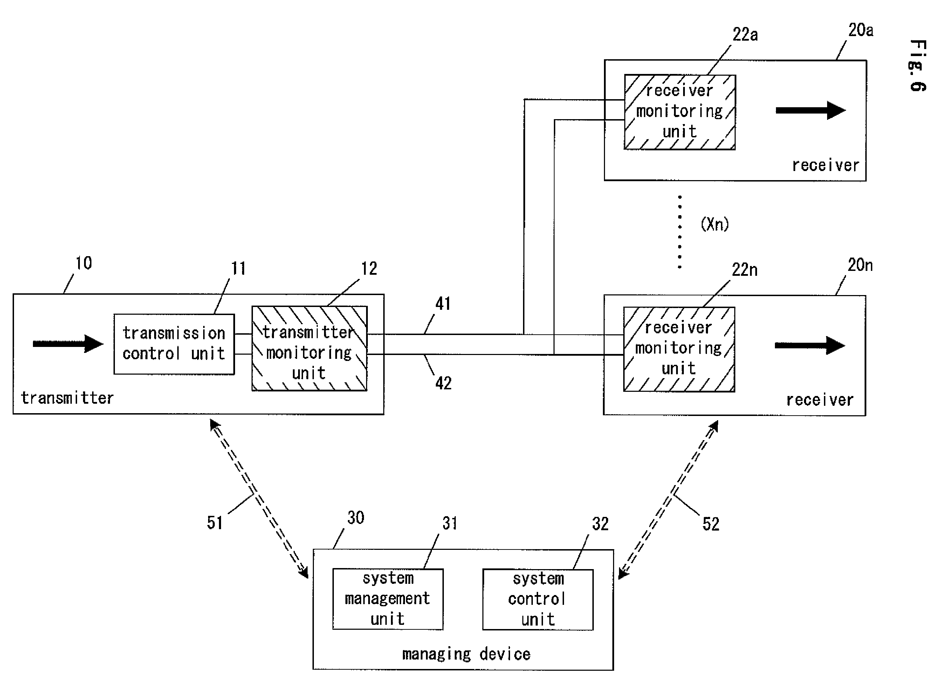

Fig. 6 is a block diagram of a balanced transmission system in Embodiment 5 of the present invention.

As shown in Fig. 6, in the balanced transmission system of the present embodiment, one transmitter 10 and a plurality of the receivers 20a to 20n are connected to the balanced transmission line that is composed of the cable 41 and the cable 42. The managing device 30 is connected to the transmitter 10 via the transmitting-side communication path 51 and to each of the receivers 20a to 20n via the receiving-side communication path 52. The transmitter 10 includes the transmission control unit 11 and the transmitter monitoring unit 12. The receivers 20a to 20n include the receiver monitoring units 22a to 22n, respectively. The managing device 30 includes the system management unit 31 and the system control unit 32.

The following explains operation of the balanced transmission system of the present embodiment.

A signal to be transmitted from the transmitter 10 to the receiver 20 is outputted from the transmission control unit 11 as transmission output, and then fed into the cable 41 and the cable 42 via the transmitter monitoring unit 12. In the present embodiment, immediately after communication starts, the transmission output to be fed into each of the cable 41 and the cable 42 is determined according to the predetermined condition. For example, the transmission control unit 11 outputs the transmission output of a comparatively small amplitude to the cable 41 and the cable 42, in order to reduce influence of momentary unwanted radiation immediately after the communication starts.

When transmission output is fed into the cable 41 and the cable 42, the transmitter monitoring unit 12 monitors the balancing of the transmission output in the cable 41 and the cable 42, generates information on transmission balancing related to the balancing of the transmission output based on the monitored result, and then transmits the information to the managing device 30 via the transmitting-side communication path 51.

Simultaneously, the receiver monitoring units 22a to 22n of each of the receivers 20a to 20n measure the input balancing of each received signal. The receiver monitoring units 22a to 22n generate information on reception balancing related to the input balancing of each input signal based on the measurement result, and then output the information on reception balancing to the managing device 30 via the receiving-side communication path 52.

In the managing device 30, the system management unit 31 manages the information on transmission balancing transmitted from the transmitter 10, the information on reception balancing transmitted from each of the receivers 22a to 22n, and the other pieces of management information related to the concerned balanced transmission system. The management is system management for lessening the EMC issue of the concerned balanced transmission system, and improving the balancing of input signals in the receivers 22a to 22n.

According to the instruction of the system management unit 31, the system control unit 32 generates control information for the transmitter 10 to feed the most suitable transmission output in terms of the EMC issue in the entire of the concerned balanced transmission system, and transmits the control information to the transmitter 10 via the transmitting-side communication path 51.

The transmission control unit 11 of the transmitter 10 controls the transmission output to be fed into the cable 41 and the cable 42, based on the control information for the transmitter 10 transmitted from the managing device 30.

Thus, in the balanced transmission system of the present embodiment, the managing device 30 generates the control information for the transmitter 10 by using the information on transmission balancing that is generated by monitoring the balancing of the transmission output at the transmission point, and the information on reception balancing that is generated by monitoring the input balancing of received signal in the receiver 20. The transmitter 10 controls the transmission output to be fed into the cable 41 and the cable 42 according to the control information for the transmitter 10. As a result, it is possible to take the EMC measures and the input balancing measures, giving consideration to the balancing of the transmission line that connect the transmitter 10 and each of the receivers 20a to 20n.

The transmitting-side communication path 51 and the receiving-side communication path 52 of the present embodiment may use the balanced transmission line which the present balanced transmission system uses for transmitting signals. In this case, the managing device 30 is connected to the cable 41 and the cable 42 as the receiver 20 is connected. Alternatively, the transmitting-side communication path 51 and the receiving-side communication path 52 of the present embodiment may use a wired or wireless LAN of another network different from the balanced transmission line that the present balanced transmission system uses for transmitting signals.

In the present embodiment, although the combination of one transmitter 10 and a plurality of the receivers 20a to 20n is explained, the present invention may be applied to a combination of one transmitter 10 and one receiver. Moreover, in the present embodiment, although the managing device 30 is assumed to be an independent device, it is also preferable to use a transmitter in which the transmitter 10 and the managing device 30 are united, or a receiver in which the receiver 20 and the managing device 30 are united.

### Embodiment 6

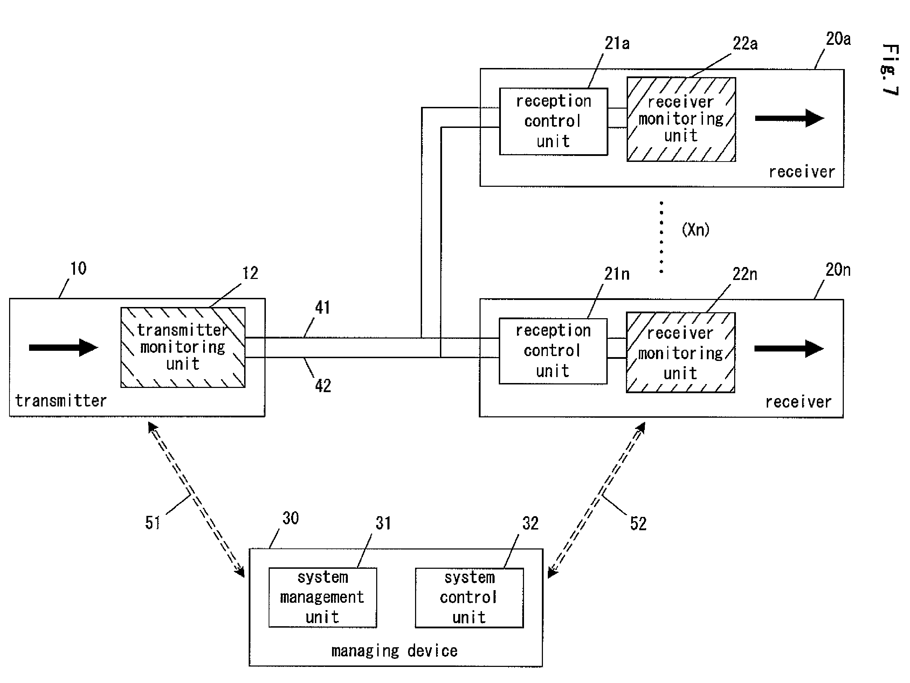

Fig. 7 is a block diagram of a balanced transmission system in Embodiment 6 of the present invention.

As shown in Fig. 7, in the balanced transmission system of the present embodiment, one transmitter 10 and a plurality of the receivers 20a to 20n are connected to the balanced transmission line that is composed of the cable 41 and the cable 42. The managing device 30 is connected to the transmitter 10 via the transmitting-side communication path 51, and to each receiver 20 via the receiving-side communication path 52. The transmitter 10 includes the transmitter monitoring unit 12. The receivers 20a to 20n include the reception control units 21a to 21n and the receiver monitoring units 22a to 22n, respectively. The managing device 30 includes the system management unit 31 and the system control unit 32.

The following explains operation of the balanced transmission system of the present embodiment.

A signal to be transmitted from the transmitter 10 to the receiver 20 is fed as transmission output into the cable 41 and the cable 42 via the transmitter monitoring unit 12. In the present embodiment, the transmitter 10 outputs the transmission output to each of the cable 41 and the cable 42 under the predetermined condition.

When the transmission output is fed into the cable 41 and the cable 42, the transmitter monitoring unit 12 monitors the balancing of the transmission output in the cable 41 and the cable 41, generates information on transmission balancing related to the balancing of the transmission output based on the monitored result, and transmits the information on transmission balancing to the managing device 30 via the transmitting-side communication path 51.

Simultaneously, the receiver monitoring units 22a to 22n of the receivers 20a to 20n measure the input balancing of the received signals. The receiver monitoring units 22a to 22n generate information on reception balancing related to the input balancing of the input signals based on the measurement result, and then transmits the information on reception balancing to the managing device 30 via the receiving-side communication path 52.

In the managing device 30, the system management unit 31 manages the information on transmission balancing transmitted from the transmitter 10, the information on reception balancing transmitted from each of the receivers 22a to 22n, and the other pieces of management information related to the concerned balanced transmission system. The management is system management for lessening the EMC issue of the concerned balanced transmission system, and improving the balancing of input signals in the receivers 22a to 22n.

According to the instruction of the system management unit 31, the system control unit 32 takes into consideration the balancing of the transmission line from the transmitter 10 to each of the receivers 20a, generates control information which each of the receivers 20a to 20n uses in controlling the input balancing of received signals, and transmits the control information to each of the receivers 20a to 20n via the receiving-side communication path 52.

In each of the receivers 20a to 20n, based on the control information transmitted from the managing device 30, each of the reception control units 21a to 21n adjusts each input balancing such that the most improvement is obtained for the input balancing of the received signal that is received by each of the receivers 20a to 20n.

Thus, in the balanced transmission system of the present embodiment, the managing device 30 generates the control information by using the information on transmission balancing that is generated by monitoring the balancing of the transmission output at the transmission point, and the information on reception balancing that is generated by monitoring the input balancing of the received signal in each of the receivers 22a to 22n. According to the control information which the managing device 30 has generated, each of the receivers 20a to 21n adjusts each input balancing such that the most improvement is obtained for the input balancing of the received signal. As a result, it is possible to take the high-precision EMC measures and the input balancing measures, giving consideration to the balancing of the transmission line that connects the transmitter 10 and each of the receivers 20a to 21n.

The transmitting-side communication path 51 and the receiving-side communication path 52 of the present embodiment may use the balanced transmission line which the present balanced transmission system uses for transmitting signals. In this case, the managing device 30 is connected to the cable 41 and the cable 42 as the receiver 20 is connected. Alternatively, the transmitting-side communication path 51 and the receiving-side communication path 52 of the present embodiment may use a wired or wireless LAN of another network different from the balanced transmission line that the balanced transmission system uses for transmitting signals.

In the present embodiment, although the combination of one transmitter 10 and a plurality of the receivers 20a to 20n is explained, the present invention may be applied to a combination of one transmitter 10 and one receiver. Moreover, in the present embodiment, although the managing device 30 is assumed to be an independent device, it is also preferable to use a transmitter in which the transmitter 10 and the managing device 30 are united, or a receiver in which the receiver 20 and the managing device 30 are united.

### Embodiment 7

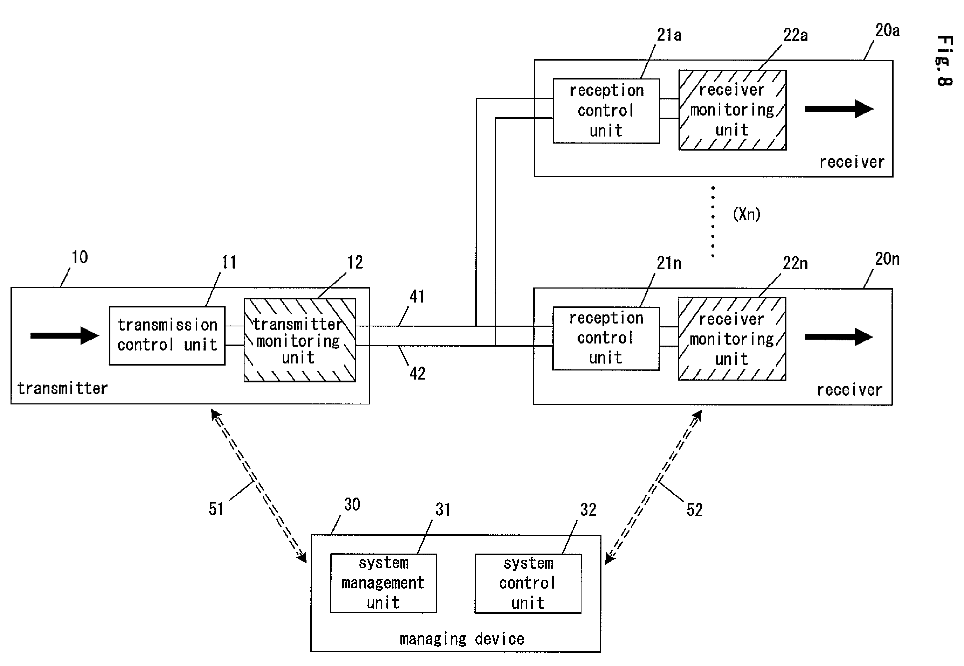

Fig. 8 is a block diagram of a balanced transmission system in Embodiment 7 of the present invention.

As shown in Fig. 8, in the balanced transmission line of the present embodiment, one transmitter 10 and a plurality of the receivers 20a to 20n are connected to the balanced transmission line that is composed of the cable 41 and the cable 42. The managing device 30 is connected to the transmitter 10 via the transmitting-side communication path 51, and to a plurality of the receivers 20a to 20n via the receiving-side communication path 52. The transmitter 10 includes the transmission control unit 11 and the transmitter monitoring unit 12. The receivers 20a to 20n include the reception control units 21a to 21n and the receiver monitoring units 22a to 22n respectively. The managing device 30 includes the system management unit 31 and the system control unit 32.

The following explains operation of the balanced transmission system of the present embodiment.

A signal to be transmitted from the transmitter 10 to the receiver 20 is outputted from the transmission control unit 11 as transmission output, and is fed into the cable 41 and the cable 42 via the transmitter monitoring unit 12. In the present embodiment, the transmitter 10 outputs the transmission output to each of the cable 41 and the cable 42 under the predetermined condition. For example, the transmission control unit 11 outputs the transmission output of a comparatively small amplitude to the cable 41 and the cable 42, in order to reduce influence of momentary unwanted radiation immediately after communication starts.

When the transmission output is fed into the cable 41 and the cable 42, the transmitter monitoring unit 12 monitors the balancing of the transmission output in the cable 41 and the cable 42, generates information on transmission balancing related to the balancing of the transmission output based on the monitored result, and transmits the information on transmission balancing to the transmitting-side communication path 51.

Simultaneously, the receiver monitoring units 22a to 22n of the receivers 20a to 20n measure the input balancing of the received signals. The receiver monitoring units 22a to 22n generate information on reception balancing related to the input balancing of the input signals based on the measurement result, and then transmits the information on reception balancing to the managing device 30 via the receiving-side communication path 52.

In the managing device 30, the system management unit 31 manages the information on transmission balancing transmitted from the transmitter 10, the information on reception balancing transmitted from the receivers 20a to 20n, and the other pieces of management information related to the concerned balanced transmission system. The management is system management for lessening the EMC issue of the concerned balanced transmission system, and improving the balancing of input signals in the receivers 20a to 20n.

According to the instruction of the system management unit 31, the system control unit 32 generates control information for the transmitter 10 to feed the most suitable transmission output in terms of the EMC issue in the entire of the concerned balanced transmission system, and transmits the control information to the transmitter 10 via the transmitting-side communication path 51. Simultaneously, the system control unit 32 generates the control information for each of the receivers 20a to 20n to control the input balancing of received signal, and transmits the control information to each of the receivers 20a to 20n via the receiving-side communication path 52.

The transmission control unit 11 of the transmitter 10 controls the transmission output to be fed into the cable 41 and the cable 42 based on the control information for the transmitter 10 transmitted from the managing device 30.

Simultaneously, in the receivers 20, the reception control units 21a to 21n adjust the input balancing based on the control information transmitted from the managing device 30 such that the most improvement is obtained for the input balancing of the received signal which each of the receivers 20a to 20n receives.

Thus, in the balanced transmission system of the present embodiment, the managing device 30 generates the control information by using the information on transmission balancing that is generated by monitoring the balancing of the transmission output at the transmission point, and the information on reception balancing that is generated by monitoring the input balancing of the received signal in the receiver 20. The transmitter 10 controls the transmission output to be fed into the cable 41 and the cable 42 according to the control information for the transmitter 10. According to the control information to each of the receivers 20a to 21n, each of the receivers 20a to 21n adjusts each input balancing such that the most improvement is obtained for the input balancing of the received signals.

As a result, it is possible to simultaneously take the high-precision EMC measures and the input balancing measures, giving consideration to the balancing of the balanced transmission line that connects the transmitter 10 and each of the receivers 20a to 21n.

The transmitting-side communication path 51 and the receiving-side communication path 52 of the present embodiment may use the balanced transmission line which the present balanced transmission system uses for transmitting signals. In this case, the managing device 30 is connected to the cable 41 and the cable 42 as the receiver 20 is connected. Alternatively, the transmitting-side communication path 51 and the receiving-side communication path 52 of the present embodiment may use a wired or wireless LAN of another network different from the balanced transmission line that the present balanced transmission system uses for transmitting signals.

In the present embodiment, although the combination of one transmitter 10 and a plurality of receivers 20a to 20n is explained, the present invention can be applied to a combination of one transmitter 10 and one receiver. Moreover, in the present embodiment, although the managing device 30 is assumed to be an independent device, it is also preferable to use a transmitter in which the transmitter 10 and the managing device 30 are united, or a receiver in which the receiver 20 and the managing device 30 are united.

As explained above, in the balanced transmission system of the present embodiment, the balancing of fed transmission output in the transmitting side and the input balancing of received signal in the receiving side are monitored. Based on the information, the managing device manages the concerned balanced transmission system entirely such that the improvement is obtained for the EMC issue and the input balancing of the received signal.

In the embodiments of the present invention, the balanced transmission line which is composed of a single pair of cables is described; however, the present invention can be applied to a balanced transmission line which is composed of multi pairs of cables.

In short, the purport of the present invention is to lessen the EMC issue of the transmission line and to improve the quality of the signal transmission, based on the information related to the balancing of the fed transmission output in the transmitting side and the information related to the input balancing of the received signal in the receiving side. Therefore, as long as it falls into the purport of the present invention, various applications are possible.

### Embodiment 8

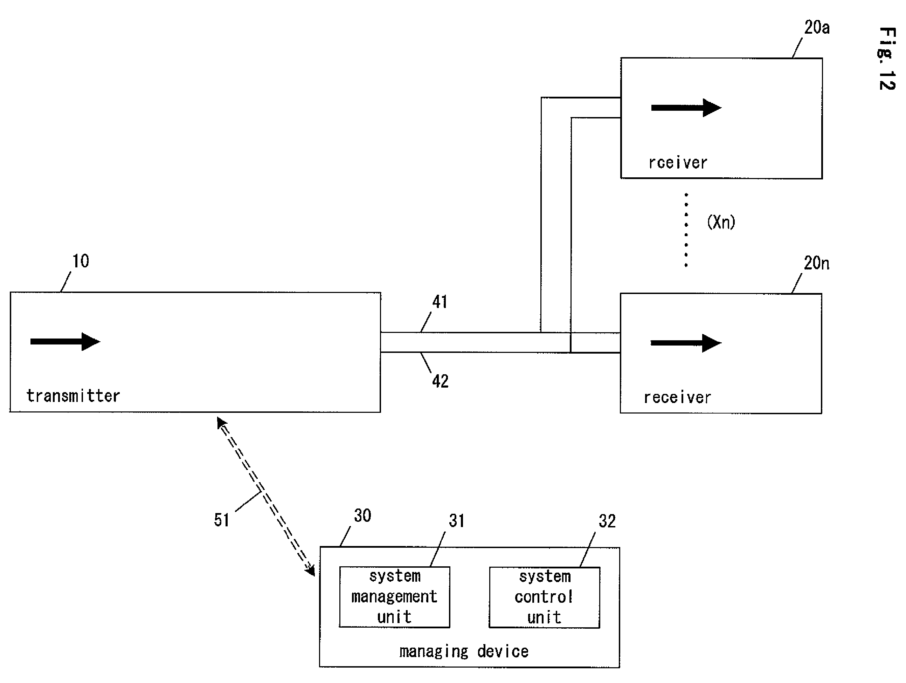

Next, a balanced transmission system in Embodiment 8 of the present invention is explained using Fig. 12 to Fig. 24. The balanced transmission system in Embodiment 8 possesses a structure operable to control the transmission output and the input balancing for a partial band of the frequency band used for a signal to be transmitted. Alternatively, the structure is operable to control the transmission output and the input balancing per each of the plurality of divided bands to which the frequency band used for a signal to be transmitted is divided.

Fig. 12 is a block diagram of the balanced transmission system in Embodiment 8 of the present invention. Fig. 13 and Fig. 14 illustrate frequency characteristic of signals that the balanced transmission system in Embodiment 8 of the present invention processes. Fig. 13 shows a state where the transmission output is controlled in a partial band 62 of the frequency band used by a signal 61 to be transmitted. Fig. 14 shows a state where the transmission output is controlled in each of a plurality of divided bands 63 to 68, to which the frequency band used for the signal 61 to be transmitted is divided.

Embodiment 8 explains a balanced transmission system which is operable to control the transmission output fed to a part of the frequency band used by a signal to be transmitted, or the transmission output fed to a plurality of divided bands created by dividing the frequency band, based on the information on transmission balancing and the information on reception balancing.

First, the system management unit 31 manages the information on transmission balancing related to the balancing of the transmission output in the cable 41 and the cable 42. The system management unit 31 also manages other management information than the information on transmission balancing. Here, the information on transmission balancing, which the system management unit 31 manages, includes the information on balancing of a partial band of the frequency band used by a signal to be transmitted, or the information on balancing for each of the plurality of divided bands.

Next, the system control unit 32 generates the control information, based on the information on transmission balancing of the partial band or each of the plurality of divided bands. The information on transmission balancing is controlled by the system management unit 31. The system control unit 32 transmits the generated control information to the transmitter 10 via the transmitting-side communication path 51.

Then, the transmitter 10 controls the output of transmitted signals fed into the cable 41 and the cable 42 based on the control information for the partial band or each of the plurality of divided bands. For example, when the balancing is very poor, the output power to the cable 41 and the cable 42 is in unbalanced state; therefore, the transmitter 10 controls the transmission power so that the output power to the cable 41 and the cable 42 should be balanced.

Moreover, the output control may include not only the control of the output power, but also the control of output current, output voltage, or output impedance.

The following explains in detail the output control to be performed for the partial band or each of the plurality of divided bands.

As shown in Fig. 13, the transmission output is controlled for a partial band or the band 62 of the frequency band used by the signal 61 to be transmitted. For example, based on such as characteristics of the transmission line and installation environment of the system, a band of which balancing is empirically judged to be poorer is selected as the partial band 62, and the output power to the partial band 62 is controlled.

The signal 61 to be transmitted possesses a definite frequency band. Due to the state of the transmission line and the installation environment, it happens that only the balancing of a partial band of the frequency band deteriorates. Especially, in a signal, such as a frequency multiplexing signal (it is called "FDM" hereafter) in which a plurality of carrier signals are multiplexed on the frequency axis and an orthogonal frequency division multiplexing signal (it is called "OFDM" hereafter), a uniform change in balancing does not occur in the entire frequency band to be used, but a change in balancing per partial band may often occur, due to difference in an output level per carrier or difference in modulation methods. A similar phenomenon may be observed for a spread spectrum signal.

When such a signal is used, it is more suitable to perform output control according to the balancing of a specific band, rather than to perform a uniform output control for the entire frequency band to be used.

Alternatively, it is also preferable that the frequency band used for a signal to be transmitted is divided into a plurality of the divided bands 63 to 68, as shown in Fig. 14, and the output control is performed for each of the divided bands 63 to 68. This is because, when the balancing is different for each band, more proper control can be attained by performing the output control per divided band based on the information on balancing.

Fig. 15, Fig. 16, and Fig. 17 are block diagrams illustrating a balanced transmission system in Embodiment 8 of the present invention.

In the structure shown in Fig. 12, the managing device 30 acquires information related to balancing from the transmitter 10. The information related to balancing may be acquired from the transmitter monitoring unit 12 included in the transmitter 10, as illustrated in the structure shown in Fig. 15. At this time, the system management unit 31 transmits the information of the divided bands to the transmitter monitoring unit 12. The transmitter monitoring unit 12 monitors the balancing of a band for which monitoring is required, and then outputs the information on balancing to the managing device 30. Based on the information on balancing of the control-required band, which is transmitted from the transmitter monitoring unit 12, the system control unit 32 generates control information of the transmission output, and outputs the control information to the transmitter 10. The transmitter 10 controls the output of the transmitted signal based on the control information.

The following explains the balanced transmission system including a band dividing unit 70 operable to divide the frequency band used for a signal to be transmitted into a plurality of bands, as shown in Fig. 16.

The band dividing unit 70 divides the frequency band used for a signal to be transmitted into a plurality of divided bands. In Fig. 16, the band dividing unit is included in the inside of the managing device 30, however, the band dividing unit may be installed in the outside of the managing device 30 or in the inside of the transmitter 10.

As shown in Fig. 14, the band dividing unit 70 divides the frequency band 61 used for a signal to be transmitted into the divided bands 63 to 68. The band dividing unit 70 outputs the divided band information related to the divided bands to the system management unit 3 1. The system management unit 31 transfers the divided band information to the transmitter monitoring unit 12. The transmitter monitoring unit 12 monitors the balancing for each of the divided bands, and outputs the monitored result to the system management unit 31. The system management unit 31 outputs the information related to the balancing to the system control unit 32. Based on the received information related to the balancing, the system control unit 32 generates control information to be used for each of the divided bands, and then outputs the control information to transmitter 10. Based on the control information, the transmitter 10 performs output control for each of the divided bands. By the above-described processing, fine control can be performed for the transmission output according to the balancing for each band.

In addition, the band dividing unit 70 may divide the frequency band equally or unequally. It is also preferable to divide the frequency band into a plurality of divided bands including a narrower band, in which the balancing is known empirically to change drastically. For example, in a frequency band where disturbance easily occurs causing a drastic change in balancing, division into narrowly divided bands is desirable. Alternatively, when the change of the balancing of a divided band is greater than a predetermined value, further subdivision may be performed.

Moreover, for a signal in which a plurality of carriers are multiplexed on the frequency axis, division of a frequency band may be performed for each carrier. This is because the multiplexed carrier signals are preferably controlled in output based on the information on balancing for each carrier, since the multiplexed carrier signals possess different degree of balancing depending on carrier conditions or characteristics.

In addition, output control may be performed not for all the divided bands, but only for a divided band in which the degree of balance exceeds the predetermined value. This is because necessary amount of processing is reduced due to the reduced number of the divided bands for which output control is performed.

For example, when the balancing of the divided bands 63 and 64 is less than a predetermined value (a value for which output control is empirically unnecessary) and the balancing of the remaining divided bands 65 to 68 is greater than the predetermined value, the output control is performed only for transmitted signals corresponding to the divided bands 65 to 68. Alternatively, for the purpose of balancing a load in control, it may be preferable to control only other divided bands than the divided bands which are empirically known beforehand to possess little deterioration in balancing. Moreover, it may be preferable to exclude from the control band a band which is for a multicarrier signal and hence whose output power is already reduced in order to avoid a mutual influence with other electric waves for communications.

In Fig. 12, Fig. 15 and Fig. 16, the transmitter 10 possesses a structure that performs control of the transmission output using the control information received; however, the structure may be changed to a structure in which the transmission control unit 11 controls the transmission output, as shown in Fig. 17.

The following explains a balanced transmission system which includes a control band selecting unit 71 operable to select a specific divided band as a control band among the plurality of divided bands.

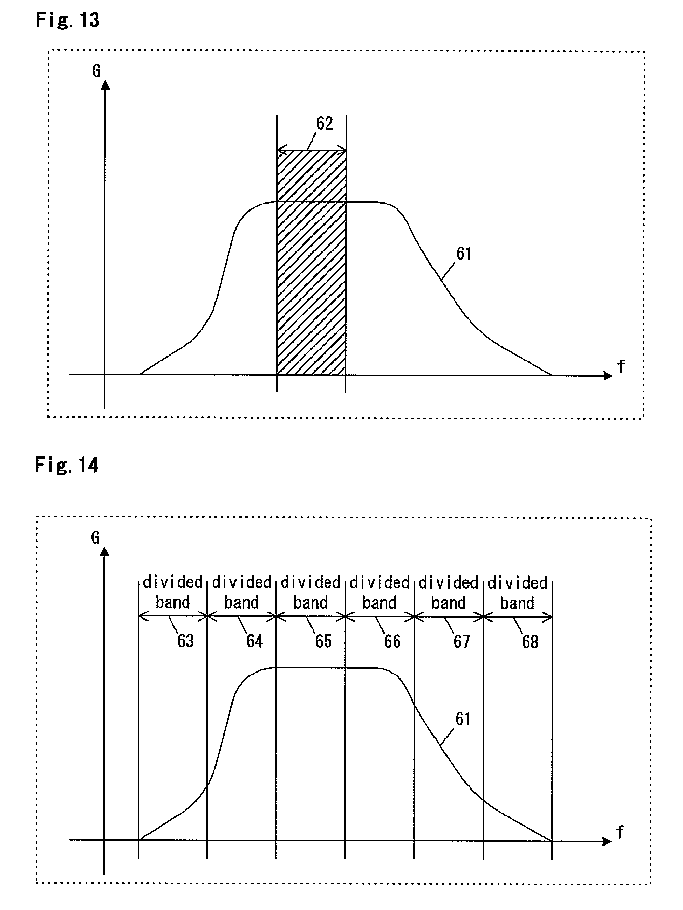

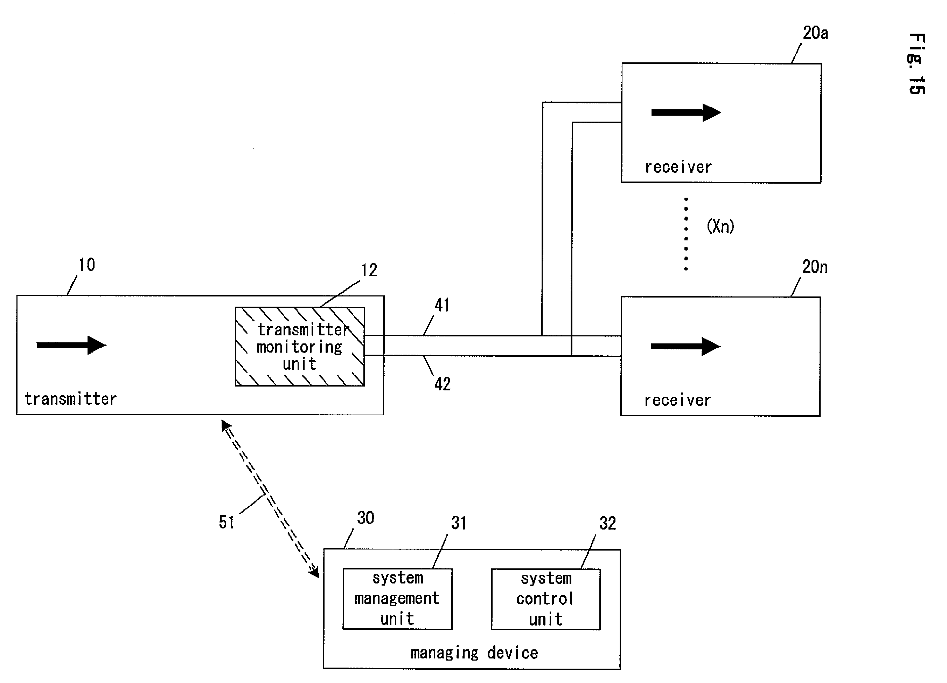

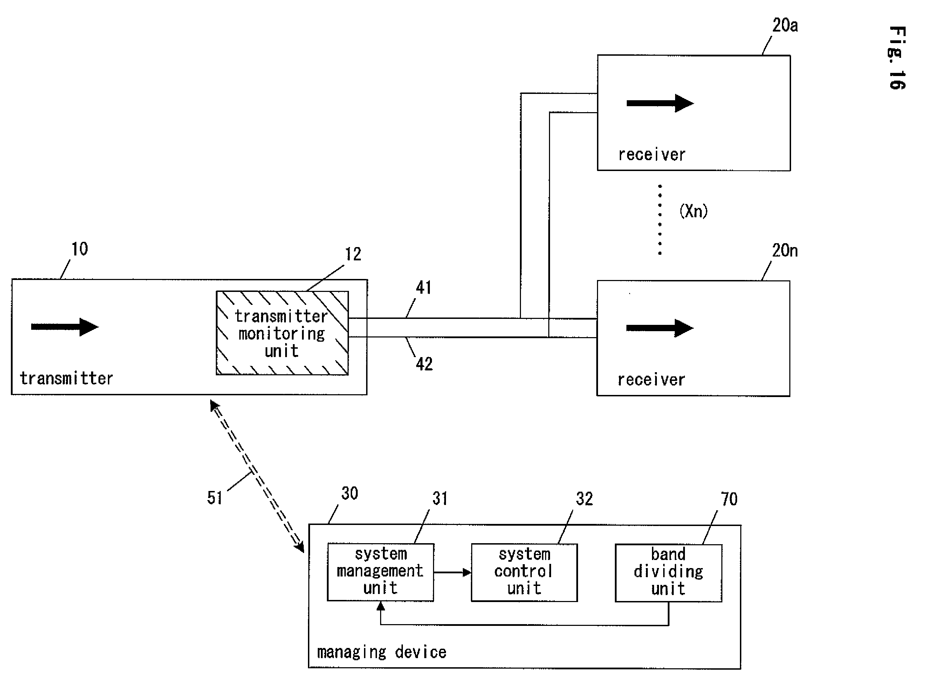

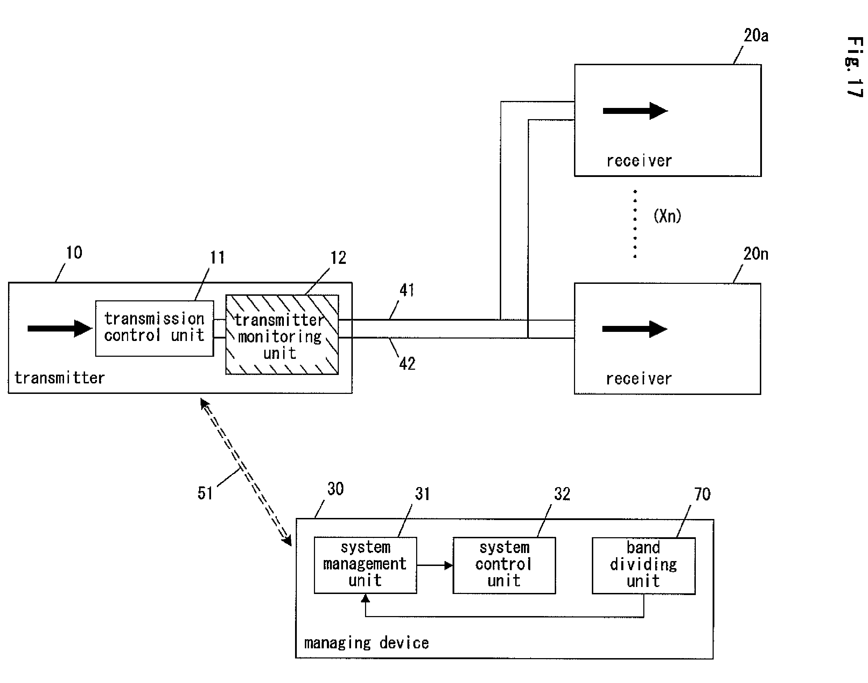

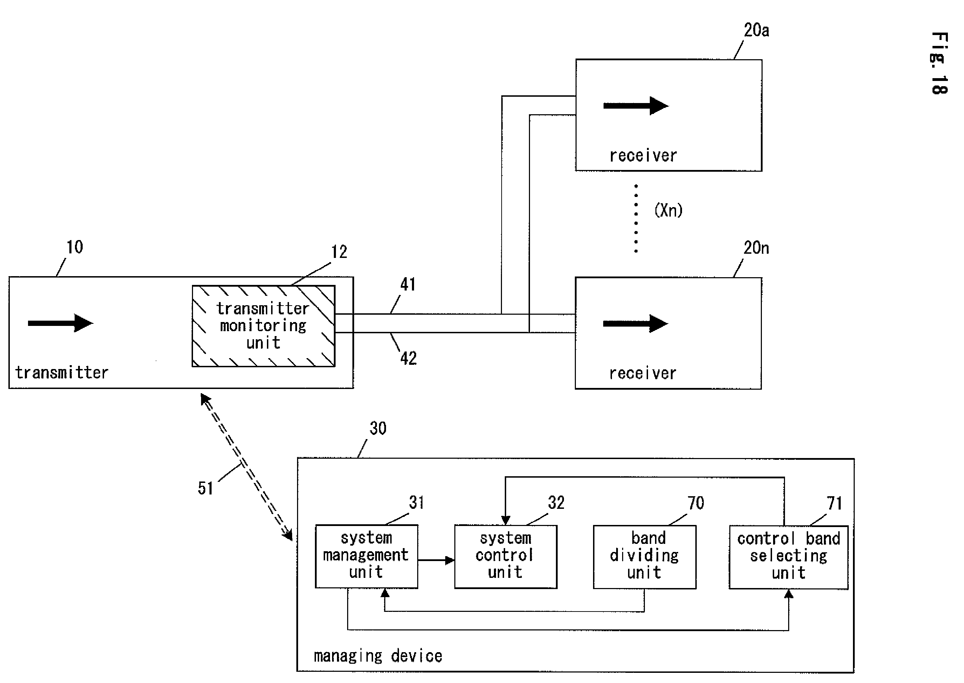

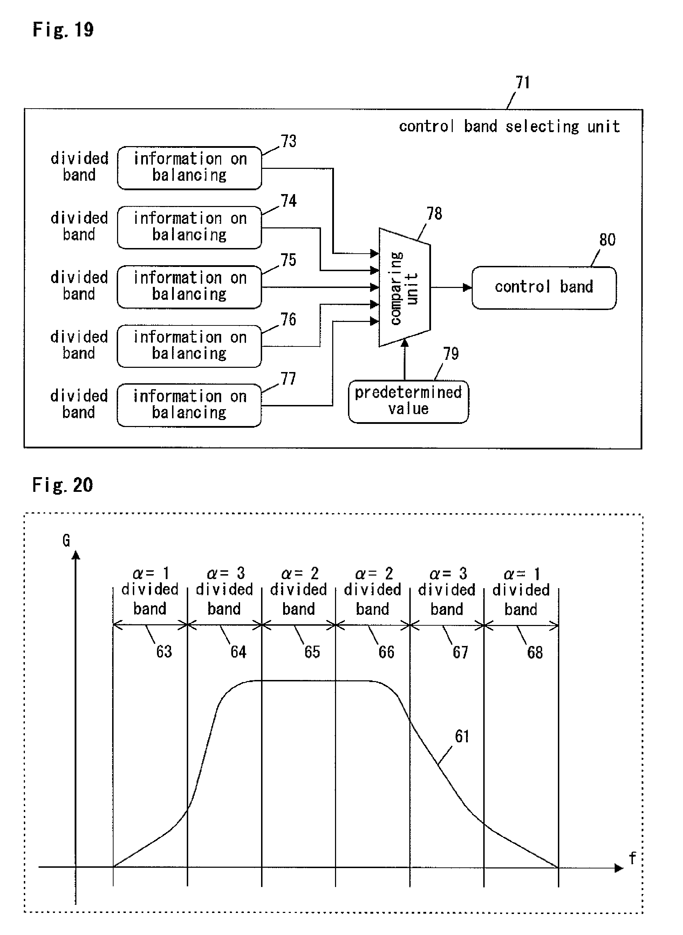

Fig. 18 is a block diagram illustrating a balanced transmission system in Embodiment 8 of the present invention. Fig. 19 is a block diagram illustrating the internal structure of the control band selecting unit in Embodiment 8 of the present invention. Fig. 20 illustrates a signal vs. frequency characteristic explaining selection of a control band in Embodiment 8 of the present invention.

In the plurality of divided bands that are divided by the band dividing unit 70, a band requiring the control of transmission output and a band not requiring the control of transmission may be mingled. For example, in one band, deterioration of balancing may be greater than the predetermined value, and in another band, deterioration may be less than the predetermined value. As another example, in multicarriers, there may be a band whose transmission output is suppressed beforehand since the band is overlapped with a frequency band used by the other system. In such a case, it is preferable not to control the transmission output for all of the divided bands, but to control the transmission output only for an arbitrary divided band.

The control band selecting unit 71 selects a control band in which transmission output is controlled, among a plurality of divided bands which the band dividing unit 70 has divided. The band dividing unit 70 divides the frequency band for a signal to be transmitted, into a plurality of divided bands. The band dividing unit 70 outputs the information of the plurality of divided bands to the system management unit 31. The system management unit 31 outputs the information of the plurality of divided bands to the transmitter monitoring unit 12. The transmitter monitoring unit 12 monitors the balancing for each divided band based on the information of the plurality of divided bands, and then outputs the information on balancing to the system management unit 31. The system management unit 31 outputs the received information on balancing for each divided band to the control band selecting unit 71. The control band selecting unit 71 selects, according to the predetermined specification, a divided band in which the transmission output is controlled among the plurality of divided bands. The control band selecting unit 71 outputs the information of the divided band selected to the system control unit 32. The system control unit 32 generates control information of transmission output regarding the selected divided band, and then outputs the control information to the transmitter 10. The transmitter 10 controls the transmission output based on the received control information. The transmitter 10 controls the transmission output by adjusting output power, output electric voltage, or output electric current of a transmitted signal. In addition, the transmission control unit 11 may alternatively perform the transmission output control.

The control band selecting unit 71 selects a band in which control is performed by comparing the information on balancing for each divided band with the arbitrarily predetermined value. Fig. 19 shows an internal structure of the control band selecting unit 71 that selects the control band 80 after comparing with the predetermined value. Each of information on balancing 73 to 77 includes the information on balancing of each divided band. The information on balancing for each of these divided bands is compared with the predetermined value 79 by a comparing unit 78. The predetermined value 79 may be arbitrarily decided, and may be variable.

As a result of the comparison by the comparing unit 78, a divided band in which balancing is greater than the predetermined value 79 is selected as the control band 80, for which the transmission output is to be controlled. The system control unit 32 generates control information of transmission output, and outputs the control information to the transmitter 10. The transmitter 10 controls the transmission output of the selected control band 80.

Moreover, as shown in Fig. 20, it is also suitable to select the control band in which the control is performed according to weighting coefficients.

The control band selecting unit 71 assigns a weighting coefficient α for each divided band. The weighting coefficient α is assigned according to the level of the change in balancing that is empirically known from such as installation environment of a balanced transmission system. In Fig. 20, the weighting coefficient α of the divided band 63 is a value "1". Similarly, the weighting coefficient α of the divided band 64 is a value "3". Of the following bands, the weighting coefficient α is values "2", "2", "3", and "1". Assume that the value of the weighting coefficient a becomes larger in proportion to the magnitude of change or deterioration of the balancing. The weighting coefficient α may be beforehand assigned from an empirical viewpoint, or may be assigned correspondingly to the degree of the balancing for each divided band.

The control band selecting unit 71 selects a control band in which the control is performed, according to the weighting coefficient α. For example, in Fig. 20, a divided band in which the value of the weighting coefficient α is larger than "3" is selected as a control band. Alternatively, a divided band in which the value of the weighting coefficient α is greater than "2" is selected as a control band. The value of the weighting coefficient may be determined, for example, by considering the processing load in controlling the transmission output.

Moreover, the selection of the control band may be performed not only by using the value of the weighting coefficient α, but preferably be performed by using a resultant value of multiplication of the balancing shown in Fig. 19 and the weighting coefficient α. According to the present selection, a control band is selected by adding an empirical tendency to the information on balancing.

In the above-mentioned processing, not only the information on transmission balancing, but also the information on reception balancing detected in the receiver 20 may be used independently, or collectively. The collective use of the information on reception balancing may help control the transmission output based on more detailed information on balancing.

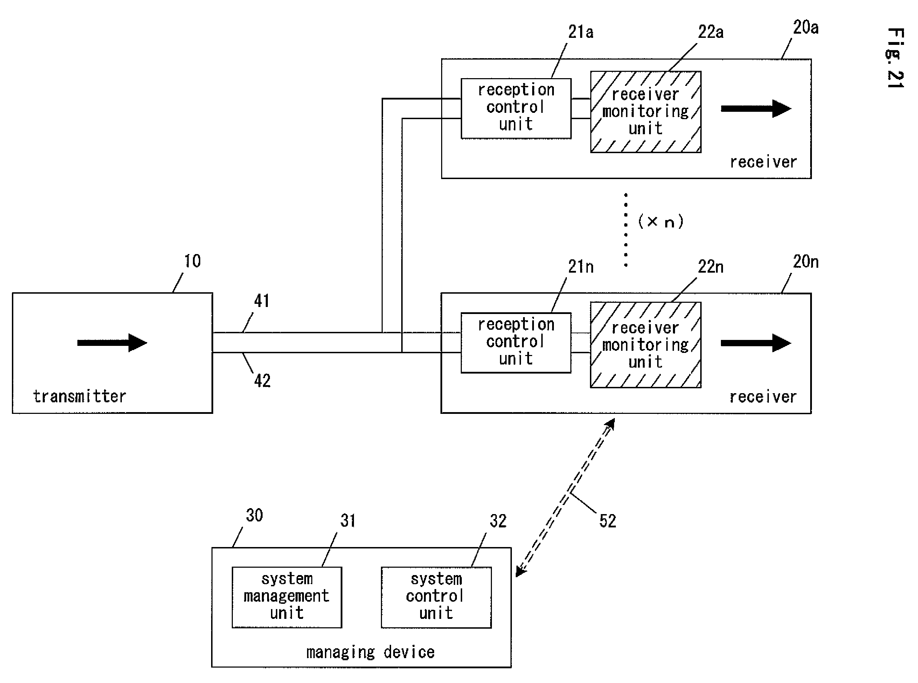

Next, Fig. 21 to Fig. 24 explain control of input balancing in the receiver 20 based on the information on balancing for a part or each divided band of the frequency band used for a signal to be transmitted. In addition, the figure illustrating frequency characteristics of the signal is similar to that used in explaining the control of the transmission output; therefore, the same figure is used in the present explanation.

Fig. 21 is a block diagram illustrating a balanced transmission system in Embodiment 8 of the present invention. In the balanced transmission system shown in Fig. 21, the managing device 30 generates control information based on the information on reception balancing from the receiver 20. Based on the control information, the managing device 30 controls the input balancing of the receiver 20. Control of the input balancing is realized by adjustment of input impedance. For example, a variable resistor and a variable capacitor are provided, and the input impedance is controlled by adjustment of the variable resistor and the variable capacitor according to the control information. Moreover, it is also suitable to make not only single use of the information on reception balancing which the receiver 20 monitors, but also collective use of the information on transmission balancing which the transmitter 10 monitors. This is because more detailed control becomes attainable. The reception balancing is monitored by the receiver monitoring unit 22, and the information on the reception balancing is outputted to the managing device 30. The control of the input balancing is performed by the reception control unit 21.

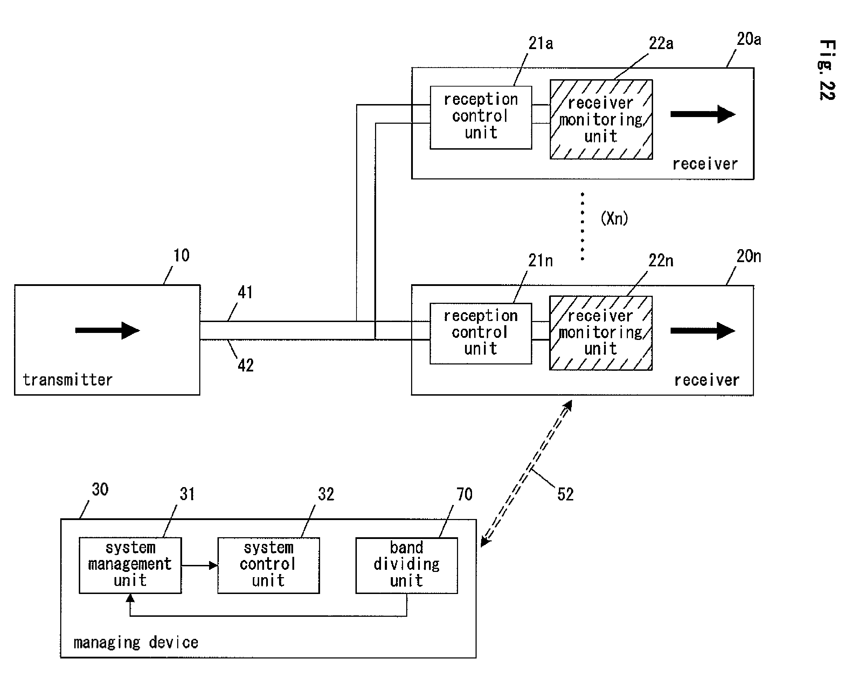

In the balanced transmission system shown in Fig. 21, the input balancing is controlled for a part, or each of a plurality of divided bands, of the frequency band used for a signal to be transmitted. When a part of the frequency band is controlled, the input balancing is controlled for a band whose balancing is especially poor due to installation environment etc. This is because controlling only a band with poor balancing may be sometimes more desirable than uniformly controlling the entire frequency band used for a signal to be transmitted. Moreover, it is possible to realize more detailed control by controlling the input balancing in harmony with the balancing for each of the plurality of divided bands. The band dividing unit 70 shown in Fig. 22 performs division to the plurality of divided bands.

Fig. 22 to Fig. 24 explain a structure which practices division to the plurality of divided bands and control of the input balancing.

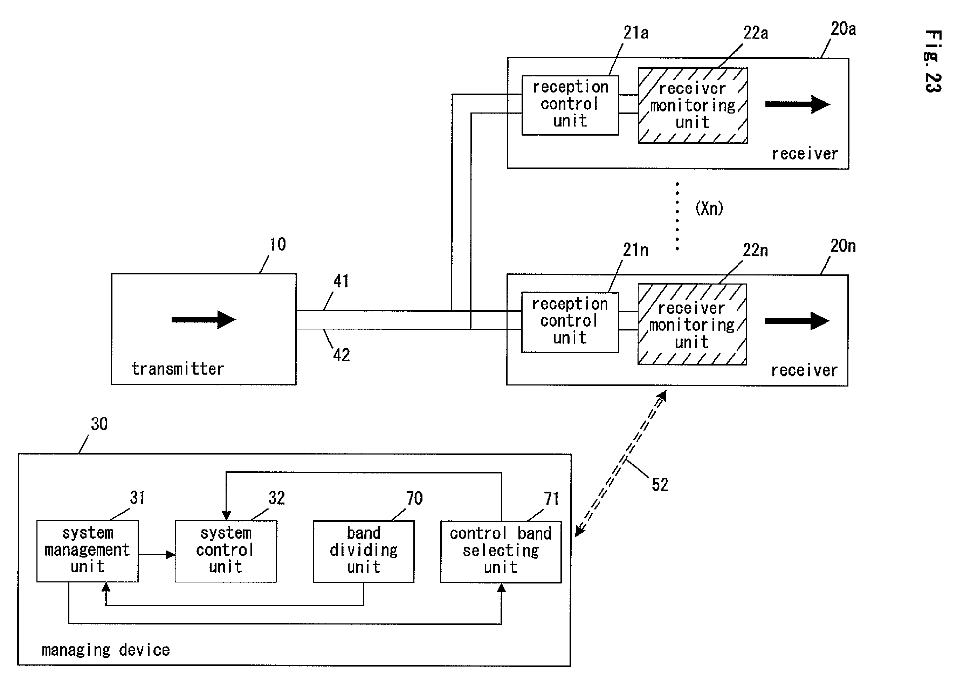

Fig. 22 and Fig. 23 are block diagrams illustrating a balanced transmission system in Embodiment 8 of the present invention.

The band dividing unit 70 divides the frequency band used for a signal to be transmitted into a plurality of divided bands, and outputs the division information to the system management unit 31. The system management unit 31 outputs the division information to the receiver 20. The receiver 20 monitors reception balancing for each divided band. The receiver 20 outputs the information on reception balancing for each divided band to the system management unit 31. The system management unit 31 outputs the information on reception balancing for each divided band to the system control unit 32. Based on the information on reception balancing, the system control unit 32 generates control information for each divided band, and transmits the control information to the receiver 20. Based on the control information received, the receiver 20 controls the input balancing for each divided band.

In addition, it is possible to configure an alternative structure in which the receiver monitoring unit 22 monitors the reception balancing, and the reception control unit 21 controls the input balancing.

In addition, the band dividing unit 70 may divide the frequency band equally or unequally. Alternatively, the band dividing unit 70 may divide the frequency band according to the magnitude of change in balancing. Moreover, further sub-division may be performed for a divided band whose balancing is especially poor.

Next, Fig. 23 illustrates a structure which comprises a control band selecting unit 71 operable to select a band to be practically controlled from the plurality of divided bands. Similar to the explanation of the transmission output control in Embodiment 8, balancing for each of the plurality of divided bands is variously different; therefore, the input balancing for all of the divided bands does not need to be controlled occasionally. Thus, selecting a control band from the plurality of divided bands is desirable from a viewpoint of efficient control.

The control band selecting unit 71 receives the information related to the reception balancing from the system management unit 31, and selects a control band according to the information on balancing for each divided band. A divided band whose balancing is greater than the predetermined value is selected as the control band. Alternatively, the control band may be decided by selecting a divided band according to the weighting coefficient that is determined beforehand. Further alternatively, the control band may be decided by selecting a divided band through a comparison between the weighting-coefficient-multiplied balancing and the predetermined value. Thus, it is possible to realize efficient control by selecting the control band to be practically controlled by the control band selecting unit 71.

Next, the following explains a structure of a balanced transmission system in which both of the control of transmission output and control of input balancing are performed.

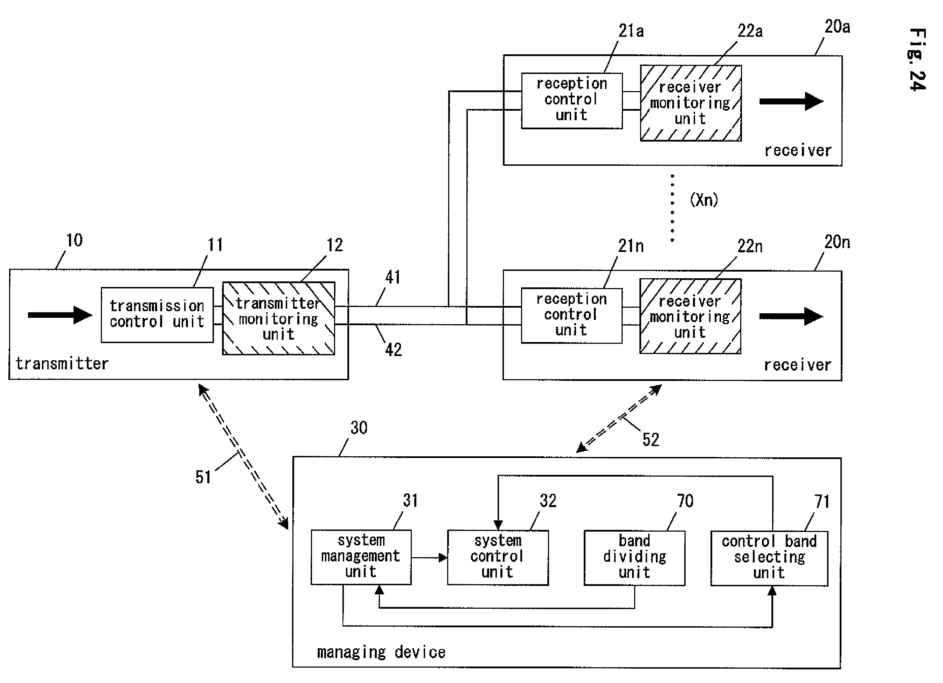

Fig. 24 is a block diagram illustrating a balanced transmission system in Embodiment 8 of the present invention.

Fig. 24 illustrates a structure in which the managing device 30 includes the band dividing unit 70 and the control band selecting unit 71, and controls the transmission output of the transmitter 10 and the input balancing of the receiver 20. The control band selecting unit 71 selects a control band out of a plurality of divided bands that is divided by the band dividing unit 70. According to the control information of the selected control band, the transmitter 10 controls the transmission output, and the receiver 20 controls the input balancing.

In addition, a control band of the transmission side and a control band of the reception side may be different. Moreover, in the system control unit 32, control information used in the transmitter 10 and control information used in the receiver 20 may be generated individually. It is sufficient that the transmission control unit 11 may perform the control of the transmission output and that the reception control unit 21 may perform the control of the input balancing.

In addition, the band dividing unit 70 and the control band selecting unit 71 may be used for one of or both of the transmission output control in the transmitter 10 and the input balancing control in the receiver 20. Moreover, the band dividing unit 70 and the control band selecting unit 71 may be installed in the managing device 30, may be installed independently, or may be installed in each of the transmitter 10 and the receiver 20.

Thus, in the balanced transmission system in Embodiment 8, the managing device 30 generates control information based on at least one of the information on transmission balancing of the transmitter 10, and the information on input balancing of the receiver 20. Furthermore, according to the control information, at least one of the transmission output of the transmitter 10 and the input balancing of the receiver 20 is controlled.

Similarly, the control is performed according to information on balancing for a part, or each of a plurality of divided bands, of the frequency band used for a signal to be transmitted. As a result, it is possible to take more detailed measures against EMC issue and input balancing, according to balancing that differs for every band.

In addition, in Embodiment 1 to Embodiment 8, the transmission balancing is detected by at least one of the transmitter 10, the transmitter monitoring unit 12, and the managing devices 30. Similarly, the reception balancing is detected by at least one of the receiver 20, the receiver monitoring unit 22, and the managing devices 30. Moreover, the transmission output is controlled by at least one of the transmitter 10, the transmission control unit 11, and the managing devices 30. The input balancing is controlled by at least one of the receiver 20, the reception control unit 21, and the managing devices 30.

According to the present invention, it is possible to provide a balanced transmission system operable to reduce the influence of the EMC issue due to unbalancing of the transmission line, and the related art thereto.

### Industrial Applicability

The balanced transmission system related to the present invention can be used in balanced transmission communication and its applicable field such as power-line communications using a power line-balanced transmission line.

## Claims

1. A balanced transmission system operable to transmit signals using a balanced transmission line composed of a pair of cables, said balanced transmission system comprising:
a transmitter connected to the balanced transmission line;
a plurality of receivers, each of said plurality of receivers being connected to the balanced transmission line; and
a managing device operable to communicate with said transmitter,
wherein said managing device controls transmission output fed by said transmitter to each of the pair of cables of the balanced transmission line, based on information on transmission balancing indicative of balancing of the transmission output fed by said transmitter to each of the pair of cables.

2. A balanced transmission system operable to transmit signals using a balanced transmission line composed of a pair of cables, said balanced transmission system comprising:
a transmitter connected to the balanced transmission line;
a plurality of receivers, each of said plurality of receivers being connected to the balanced transmission line; and
a managing device operable to communicate with said transmitter and said plurality of receivers,
wherein said managing device controls input balancing of received signals received by said plurality of receivers, based on information on transmission balancing indicative of balancing of transmission output fed by said transmitter to each of the pair of cables.

3. A balanced transmission system operable to transmit signals using a balanced transmission line composed of a pair of cables, said balanced transmission system comprising:
a transmitter connected to the balanced transmission line;
a plurality of receivers, each of said plurality of receivers being connected to the balanced transmission line; and
a managing device operable to communicate with said transmitter and said plurality of receivers,
wherein said managing device controls transmission output fed by said transmitter to each of the pair of cables of the balanced transmission line and input balancing of received signals received by said plurality of receivers, based on information on transmission balancing indicative of balancing of the transmission output fed by said transmitter to each of the pair of cables.

4. A balanced transmission system operable to transmit signals using a balanced transmission line composed of a pair of cables, said balanced transmission system comprising:
a transmitter connected to the balanced transmission line;
a plurality of receivers, each of said plurality of receivers being connected to the balanced transmission line; and
a managing device operable to communicate with said transmitter and said plurality of receivers,
wherein said managing device controls transmission output fed by said transmitter to each of the pair of cables of the balanced transmission line, based on information on reception balancing indicative of input balancing of received signals received by said plurality of receivers.

5. A balanced transmission system operable to transmit signals using a balanced transmission line composed of a pair of cables, said balanced transmission system comprising:
a transmitter connected to the balanced transmission line;
a plurality of receivers, each of said plurality of receivers being connected to the balanced transmission line; and
a managing device operable to communicate with said plurality of receivers,
wherein said managing device controls input balancing of received signals received by said plurality of receivers, based on information on reception balancing indicative of the input balancing of the received signals.

6. A balanced transmission system operable to transmit signals using a balanced transmission line composed of a pair of cables, said balanced transmission system comprising:
a transmitter connected to the balanced transmission line;
a plurality of receivers, each of said plurality of receivers being connected to the balanced transmission line; and
a managing device operable to communicate with said transmitter and said plurality of receivers,
wherein said managing device controls transmission output fed by said transmitter to each of the pair of cables of the balanced transmission line and input balancing of received signals received by said plurality of receivers, based on information on reception balancing indicative of the input balancing of the received signals.

7. A balanced transmission system operable to transmit signals using a balanced transmission line composed of a pair of cables, said balanced transmission system comprising:
a transmitter connected to the balanced transmission line;
a plurality of receivers, each of said plurality of receivers being connected to the balanced transmission line; and
a managing device operable to communicate with said transmitter and said plurality of receivers,
wherein said managing device controls transmission output fed by said transmitter to each of the pair of cables of the balanced transmission line, based on information on transmission balancing indicative of balancing of the transmission output fed by said transmitter to each of the pair of cables and on information on reception balancing indicative of input balancing of received signals received by said plurality of receivers.

8. A balanced transmission system operable to transmit signals using a balanced transmission line composed of a pair of cables, said balanced transmission system comprising:
a transmitter connected to the balanced transmission line;
a plurality of receivers, each of said plurality of receivers being connected to the balanced transmission line; and
a managing device operable to communicate with said transmitter and said plurality of receivers,
wherein said managing device controls input balancing of received signals received by said plurality of receivers, based on information on transmission balancing indicative of balancing of transmission output fed by said transmitter to each of the pair of cables and on information on reception balancing indicative of the input balancing of the received signals received by said plurality of receivers.

9. A balanced transmission system operable to transmit signals using a balanced transmission line composed of a pair of cables, said balanced transmission system comprising:
a transmitter connected to the balanced transmission line;
a plurality of receivers, each of said plurality of receivers being connected to the balanced transmission line; and
a managing device operable to communicate with said transmitter and said plurality of receivers,
wherein said managing device controls transmission output fed by said transmitter to each of the pair of cables of the balanced transmission line and input balancing of received signals received by said plurality of receivers, based on information on transmission balancing indicative of balancing of the transmission output fed by said transmitter to each of the pair of cables and on information on reception balancing indicative of the input balancing of the received signals received by said plurality of receivers.

10. A balanced transmission system operable to transmit signals using a balanced transmission line composed of a pair of cables, said balanced transmission system comprising:
a transmitter connected to the balanced transmission line;
a receiver connected to the balanced transmission line; and
a managing device operable to communicate with said transmitter and said receiver,
wherein said managing device controls transmission output fed by said transmitter to each of the pair of cables of the balanced transmission line, based on information on reception balancing indicative of input balancing of a received signal received by said receiver.

11. A balanced transmission system operable to transmit signals using a balanced transmission line composed of a pair of cables, said balanced transmission system comprising:
a transmitter connected to the balanced transmission line;
a receiver connected to the balanced transmission line; and
a managing device operable to communicate with said transmitter and said receiver,
wherein said managing device controls input balancing of a received signal received by said receiver, based on information on reception balancing indicative of the input balancing of the received signal received by said receiver.

12. A balanced transmission system operable to transmit signals using a balanced transmission line composed of a pair of cables, said balanced transmission system comprising:
a transmitter connected to the balanced transmission line;
a receiver connected to the balanced transmission line; and
a managing device operable to communicate with said transmitter and said receiver,
wherein said managing device controls transmission output fed by said transmitter to each of the pair of cables of the balanced transmission line and input balancing of a received signal received by said receiver, based on information on reception balancing indicative of the input balancing of the received signal received by said receiver.

13. The balanced transmission system as defined in claim 1, wherein said transmitter comprises a transmitter monitoring unit operable to monitor the transmission balancing indicative of the balancing of the transmission output fed by said transmitter to each of the pair of cables.

14. The balanced transmission system as defined in claim 1, wherein said transmitter comprises a transmission control unit operable to control the transmission output to be fed to each of the pair of cables of the balanced transmission line, based on control information sent from said managing device.

15. The balanced transmission system as defined in claim 4, wherein each of said plurality of receivers comprises a receiver monitoring unit operable to monitor input balancing of a received signal received by each of said plurality of receivers.

16. The balanced transmission system as defined in claim 2, wherein each of said plurality of receivers comprises a reception control unit operable to control input balancing of a received signal received by each of said plurality of receivers, based on control information sent from said managing device.

17. The balanced transmission system as defined in claim 10, wherein said receiver comprises a receiver monitoring unit operable to monitor input balancing of a received signal received by said receiver.

18. The balanced transmission system as defined in claim 11, wherein said receiver comprises a reception control unit operable to control input balancing of a received signal received by said receiver, based on control information sent from said managing device.

19. The balanced transmission system as defined in claim 1, wherein said managing device is operable to communicate with said transmitter and at least one of said plurality of receivers, using the balanced transmission line.

20. The balanced transmission system as defined in claim 1, wherein said managing device is operable to communicate with said transmitter and at least one of said plurality of receivers, using a wired LAN.

21. The balanced transmission system as defined in claim 1, wherein said managing device is operable to communicate with said transmitter and at least one of said plurality of receivers, using a wireless LAN.

22. The balanced transmission system as defined in claim 1, wherein said managing device is operable to control transmission output in at least a part of a frequency band, the frequency band being used for transmitting signals.

23. The balanced transmission system as defined in claim 22, wherein said managing device comprises a band dividing unit operable to divide the frequency band used for transmitting signals into a plurality of divided bands.

24. The balanced transmission system as defined in claim 23, wherein said band dividing unit is operable to further divide one of the plurality of divided bands into a plurality of sub-divided bands, the one of the plurality of divided bands being a band in which a change in the balancing of the transmission output is greater than a predetermined value.

25. The balanced transmission system as defined in claim 23, wherein said managing device is operable to control transmission output for each of the plurality of divided bands divided by said band dividing unit.

26. The balanced transmission system as defined in claim 22, wherein said managing device further comprises a control band selecting unit operable to select, from the plurality of divided bands, a control band for which the transmission output is controlled, and
wherein said managing device is operable to control the transmission output in the control band selected by said control band selecting unit.

27. The balanced transmission system as defined in claim 26, wherein said control band selecting unit selects one of the plurality of divided bands as the control band, the one of the plurality of divided bands being a band in which a change in the balancing of the transmission output is greater than a predetermined value.

28. The balanced transmission system as defined in claim 26, wherein said control band selecting unit selects the control band from the plurality of divided bands, in accordance with weighting coefficients allotted respectively to the plurality of divided bands.

29. The balanced transmission system as defined in claim 22, wherein the control of the transmission output is performed by said transmitter.

30. The balanced transmission system as defined in claim 2, wherein said managing device is operable to control input balancing in at least a part of a frequency band, the frequency band being used for transmitting signals.

31. The balanced transmission system as defined in claim 30, wherein said managing device comprises a band dividing unit operable to divide the frequency band used for transmitting signals into a plurality of divided bands.

32. The balanced transmission system as defined in claim 31, wherein said band dividing unit is operable to further divide one of the plurality of divided bands into a plurality of sub-divided bands, the one of the plurality of divided bands being a band in which a change in the balancing of the transmission output is greater than a predetermined value.

33. The balanced transmission system as defined in claim 30, wherein said managing device is operable to control input balancing for each of the plurality of divided bands divided by said band dividing unit.

34. The balanced transmission system as defined in claim 30, wherein said managing device further comprises a control band selecting unit operable to select, from the plurality of divided bands, a control band for which the input balancing is controlled, and
wherein said managing device is operable to control the input balancing in the control band selected by said control band selecting unit.

35. The balanced transmission system as defined in claim 34, wherein said control band selecting unit selects one of the plurality of divided bands as the control band, the one of the plurality of divided bands being a band in which a change in the balancing of the transmission output is greater than a predetermined value.

36. The balanced transmission system as defined in claim 34, wherein said control band selecting unit selects the control band from the plurality of divided bands, in accordance with weighting coefficients allotted respectively to the plurality of divided bands.

37. The balanced transmission system as defined in claim 30, wherein the control of the input balancing is performed by said receiver.

38. A communication device operable to communicate using a balanced transmission line composed of a pair of cables, wherein said communication device controls at least one of transmission output fed by said communication device to each of the pair of cables of the balanced transmission line and input balancing of received signals received by said communication device, based on at least one of information on transmission balancing indicative of balancing of the transmission output fed by said communication device to each of the pair of cables and information on reception balancing indicative of the input balancing of the received signals received by said communication device.
